# EUROPEAN PATENT SPECIFICATION

(11) **EP 2 327 746 B1**
(45) Date of publication and mention of the grant of the patent: **20.02.2013**
(21) Application number: 10192531.1
(22) Date of filing: 25.11.2010
(51) Int. Cl.: C09D 11/00

(54) **Aqueous ink composition and image forming method**
Wässrige Tintenzusammensetzung und Bilderzeugungsverfahren
Composition d'encre aqueuse et procédé de formation d'images

(30) Priority: 26.11.2009 JP 2009268822
(43) Date of publication of application: 01.06.2011
(73) Proprietor: Fujifilm Corporation, Minato-ku Tokyo (JP)
(72) Inventor: Wachi, Naotaka, Kanagawa (JP); Ohzeki, Tomoyuki, Kanagawa (JP); Matsumoto, Jun, Kanagawa (JP); Ikoshi, Masao, Kanagawa (JP); Tateishi, Keiichi, Kanagawa (JP)
(74) Representative: HOFFMANN EITLE

(56) References cited:
- EP-A2- 1 106 658
- WO-A1-2009/110643

## Description

### BACKGROUND

### Field of the Invention

The present invention relates to an aqueous ink composition and an image forming method.

### Related Art

Pigment-based inks are available as a type of ink for inkjet printers. Pigments are superior in light resistance and water resistance as compared with dyes, and in recent years, pigments have been used as a colorant for ink compositions for inkjet printer, for the purpose of improving light resistance and water resistance. Since pigments are generally insoluble in water, in the case of using a pigment in a water-based ink composition, it is needed to prepare an ink composition after mixing the pigment together with a dispersant such as a water-soluble resin, and thereby stably dispersing the pigment in water. However, even though ink compositions are prepared according to the method described above, there still occur problems such as poor ejectability of the ink composition.

In order to solve such problems, numerous methods for dispersion and ink compositions for inkjet image forming have been suggested thus far.

Meanwhile, there has been disclosed an inkjet recording liquid containing, for example, a pigment and colloidal silica, because it is considered that when printing is carried out on ordinary paper, high resolution printing can be achieved, and the recording liquid acquires excellent water resistance and light resistance (see, for example, Japanese Patent Application Laid-Open (JP-A) No. 09-227812).
Also disclosed as a water-base ink composition that is particularly suitable for the use in an inkjet printing method, is an ink composition containing an aqueous liquid vehicle, a colorant, and about 0.1 to about 5% by weight of silica particles (see, for example, JP-A No.05-117562).

### SUMMARY

The present invention has been made in view of the above circumstances and provides an aqueous ink composition including:
a coloring material containing at least one of an azo pigment represented by the following formula (1), a tautomer thereof, a salt of the pigment or the tautomer, or a hydrate of the pigment or the tautomer;
a dispersant; and
colloidal silica: 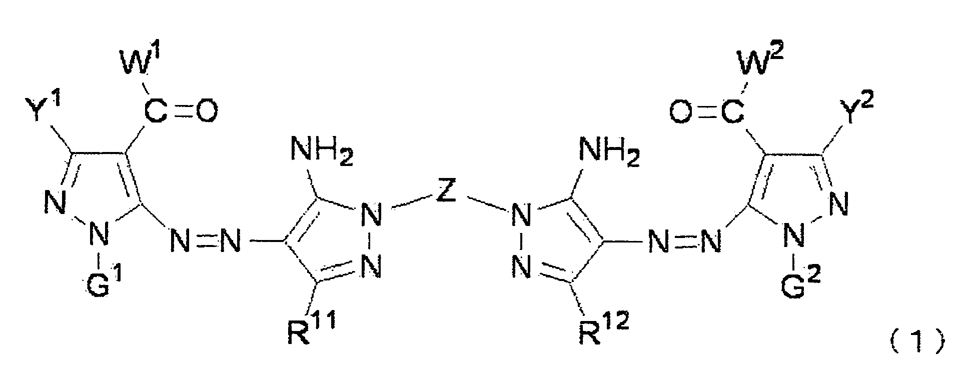 wherein Z represents a divalent group derived from a 5- to 8-membered nitrogen-containing heterocyclic ring; Y¹, Y², R¹¹ and R¹² each independently represent a hydrogen atom or a substituent; G¹ and G² each independently represent a hydrogen atom, an alkyl group, an aralkyl group, an alkenyl group, an alkynyl group, an aryl group or a heterocyclic group; and W¹ and W² each independently represent an alkoxy group, an amino group, an alkyl group or an aryl group.

### BRIEF DESCRIPTION OF THE DRAWINGS

Exemplary embodiments of the present invention will be described in detail, based on the following figures, wherein:
FIG. 1 is a schematic cross-sectional view showing an example of the internal structure of an inkjet head; and
FIG. 2 is a schematic diagram showing an example of the ejection port arrangement in a nozzle plate.

### DETAILED DESCRIPTION OF THE INVENTIONS

### <Aqueous ink composition>

The aqueous ink composition of the invention (hereinafter, may be simply referred to as "ink composition") is constituted to include a coloring material containing at least one of an azo pigment represented by the formula (1) shown below (hereinafter, also referred to as "azo pigment of a particular structure") and a tautomer thereof as well as a salt of the pigment or the tautomer and a hydrate of the pigment or the tautomer, at least one dispersant, and at least one kind of colloidal silica, and to further include other components as necessary.
When the ink composition of the invention is prepared to have a constitution as described above, and particularly when the ink composition is made to include an azo pigment of a particular structure and colloidal silica, the ink composition acquires excellent ejectability (ejection restorability), and shape deformation (corrosion) of inkjet head members and a decrease in liquid repellency may be suppressed. As a result, even when image formation according to an in inkjet method is carried out over a long time period, the occurrence of deterioration in the ejection performance or of ink leakage is greatly reduced, and an effect of greatly reducing the occurrence of a disturbance in the direction of ink ejection and consequent deterioration in the printed image quality, may be obtained.

In general, a member constituting an inkjet head is imparted with liquid repellency so as to maintain the ink ejection performance. This liquid repellency may be imparted by, for example, treating the member surface using a fluorine-based surface treating agent. Furthermore, this liquid repellency of inkjet head members is known to be slowly reduced as a result of contact with ink, when the inkjet head is used over a long time.
On the other hand, there are instances where a nozzle plate is constituted to include silicon or the like (Si, SiO₂ or the like), particularly in order to form fine nozzles (ejection ports) with accuracy. In an inkjet head equipped with such a silicon nozzle plate, corrosion occurs as a result of contact with ink, and it is known that even in the case where the plate surface has been imparted with liquid repellency, corrosion occurs as a result of penetration of the ink and a decrease in the liquid repellency. In this case as well, a decrease in the liquid repellency of the nozzle plate affects the ink ejectability.
Although the aqueous ink composition of the invention contains a yellow pigment which has a risk of causing corrosion in an inkjet head member that is brought into contact with ink, the aqueous ink composition may more effectively suppress corrosion or a decrease in the liquid repellency of an inkjet head member, even when used in an inkjet head having a nozzle plate which has been imparted with liquid repellency or formed from silicon or the like as described above.

### (Colloidal silica)

The colloidal silica is a colloid formed from microparticles of an inorganic oxide containing silicon, which have an average particle size of several hundred nanometers or less. The colloidal silica contains silicon dioxide (includes hydrates thereof) as a main component, and may contain an aluminate as a small-amount component. Examples of the aluminate that may be contained as a small-amount component include sodium aluminate and potassium aluminate.
The colloidal silica may also contain an inorganic salt such as sodium hydroxide, potassium hydroxide, lithium hydroxide and ammonium hydroxide, and an organic salt such as tetramethylammonium hydroxide. These inorganic salts and organic salts act as, for example, stabilizers of the colloid.

There are no particular limitations on the dispersion medium of the colloidal silica, and the dispersion medium may be any of water, an organic solvent and a mixture thereof. The organic solvent may be a water-soluble organic solvent or a non-water-soluble organic solvent, but a water-soluble organic solvent is preferred. Specific examples thereof include methanol, ethanol, isopropyl alcohol and n-propanol. A colloidal silica dispersed in water is called as an aqueous sol, while a colloidal silica dispersed in an organic solvent is called as an organosol.

There are no particular limitations on the method for producing colloidal silica, and the colloidal silica may be produced by a conventionally used method. For example, the colloidal silica may be produced by Aerosil synthesis based on thermal decomposition of silicon tetrachloride, or by using water glass. Alternatively, the colloidal silica may also be produced by a liquid phase synthesis method called hydrolysis of an alkoxide (see, for example, "Sen'I-to-Kogyo", Vol. 60, No. 7(2004), p.376), or the like.

There are no particular limitations on the average particle size of the particles included in the colloidal silica according to the invention. The average particle size may be adjusted to, for example, 1 nm to 100 nm, preferably 1 nm to 25 nm, more preferably 3 nm to 25 nm, and particularly preferably 5 nm to 20 nm.
When the average particle size is 25 nm or less, the damages (for example, a decrease in liquid repellency) caused by the ink to the members constituting the inkjet head, such as a base material, a protective film and a liquid-repellent film, may be more effectively suppressed. That is, the ink head attacking property of the ink composition may be suppressed. This may be thought to be because, for example, when the average particle size is small, the total surface area of the particles is increased, and thereby the damages to the members constituting an inkjet head may be more effectively suppressed. Also from the viewpoint of the ejectability of the ink composition and the abrasive effect of the particles, it is preferable that the average particle size of the particles be 25 nm or less. When the average particle size is 1 nm or greater, productivity is enhanced, and a colloidal silica having less fluctuation in the performance may be obtained.

The average particle size of the colloidal silica as used in the invention is represented by the volume average particle size. The volume average particle size may be determined by general measurement techniques for dispersed particles, such as a light scattering method and a laser diffraction method.
According to the invention, the values determined by a light scattering method are used.
There are no particular limitations on the shape of the colloidal silica, as long as the shape does not obstruct the ejection performance of the ink. For example, the shape may be any of a spherical shape, an elongated shape, a needle shape and a bead shape. Among them, from the viewpoint of ink ejectability, the colloidal silica particles are preferably spherical-shaped.

The colloidal silica that may be used in the invention may be a product produced by the production method described above, or may be a commercially available products. Specific examples of commercially available products include LUDOX AM, LUDOX AS, LUDOX LS, LUDOX TM, LUDOX HS (all trade names, manufactured by E.I. Du Pont de Nemours & Co.); SNOWTEX S, SNOWTEX XS, SNOWTEX 20, SNOWTEX 30, SNOWTEX 40, SNOWTEX N, SNOWTEX C, SNOWTEX 0 (all trade names, manufactured by Nissan Chemical Industries, Ltd.); SYTON C-30, SYTON ZOO (all trade names, manufactured by Monsanto Co.); NALCOAG-1 060, NALCOAG-ID21 to 64 (all trade names, manufactured by Nalco Chem Co.); METHANOL SOL, IPA SOL, MEK SOL, TOLUENE SOL (all trade names, manufactured by Fuso Chemical Co., Ltd.): CATALOID-S, CATALOID-F120, CATALOID SI-350, CATALOID SI.-500, CATALOID SI-30, CATALOID S-20L, CATALOID S-20H, CATALOID S-30L, CATALOID S-30H, CATALOID SI-40, OSCAL-1432 (isopropyl alcohol sol) (all trade names, manufactured by Nikki Chemical Co., Ltd.); and ADELITE (trade name, manufactured by Asahi Denka Kogyo K.K.), and examples of commercially available bead-shaped colloidal silica include SNOWTEX ST-UP, SNOWTEX PS-S, SNOWTEX PS-M, SNOWTEX ST-OUP, SNOWTEX PS-SO, and SNOWTEX PS-MO (all trade names, manufactured by Nissan Chemical Industries, Ltd.). These products are easily available.

The pH of the commercially available colloidal silica dispersion liquid is often adjusted to be acidic or alkaline. This is because the stable dispersion region of colloidal silica exists on the acidic side or on the alkaline side. In the case of adding a commercially available colloidal silica dispersion liquid to an ink composition, it is necessary to take the pH of the stable dispersion region of the colloidal silica and the pH of the ink composition into consideration, before the colloidal silica dispersion liquid is added.

There are no particular limitations on the content of the colloidal silica in the ink composition of the invention. The content of the colloidal silica may be set at, for example, 0.0001% by mass to 10% by mass of the total amount of the ink composition, and the content is preferably 0.0005% by mass to 0.5% by mass, more preferably 0.001 % by mass to 0.5% by mass, even more preferably 0.005% by mass to 0.5% by mass, particularly preferably 0.01 % by mass to 0.3% by mass, and most preferably 0.01% by mass to 0.1% by mass.
When the content of the colloidal silica in the ink composition is less than or equal to the upper limit value, the ejectability (especially, ejectability after a long-term storage) of the ink composition is further enhanced, and the effect of the abrasive effect of the silica particles on the inkjet head may be more effectively suppressed. Furthermore, when the content is equal to or greater than the lower limit value, a decrease in the liquid repellency of inkjet head members may be more effectively suppressed.

It is preferable, from the viewpoint of suppressing a decrease in the liquid repellency of inkjet head members and improving ink ejectability, that the ink composition of the invention contain a colloidal silica having a volume average particle size of 1 nm to 25 nm (more preferably 3 nm to 25 nm) in an amount of 0.005% by mass to 0.5% by mass of the total amount of the ink composition, more preferably a colloidal silica having a volume average particle size of 5 nm to 20 nm in an amount of 0.005% by mass to 0.5% by mass of the total amount of the ink composition, and particularly preferably a colloidal silica having a volume average particle size of 5 nm to 20 nm in an amount of 0.05% by mass to 0.1% by mass of the total amount of the ink composition.

### (Coloring material)

The aqueous ink composition of the invention includes a coloring material containing at least one of an azo pigment represented by the following formula (1) and a tautomer as well as salts and hydrates of the pigment and the tautomers.
The azo pigment that constitutes the coloring material that is used in the invention is typically represented by the formula (1). The azo pigment may be a compound having the structure represented by the formula (1), or may be a tautomer thereof. When such an azo pigment having a particular structure is used, an ink composition excellent in light resistance and ejection stability (especially, ejection restorability) may be constituted.
Hereinafter, the azo pigment represented by the following formula (1) will be explained.
The compound represented by the formula (1) is likely to form an intermolecular interaction due to its characteristic structure, has low solubility in water, an organic solvent or the like, and may be used as an azo pigment.
The pigment is different from a dye which is used after being dissolved in water, an organic solvent or the like in a molecular dispersion state, and the pigment is used in a state of being finely dispersed in a solvent in the form of solid particles such as molecular aggregates.

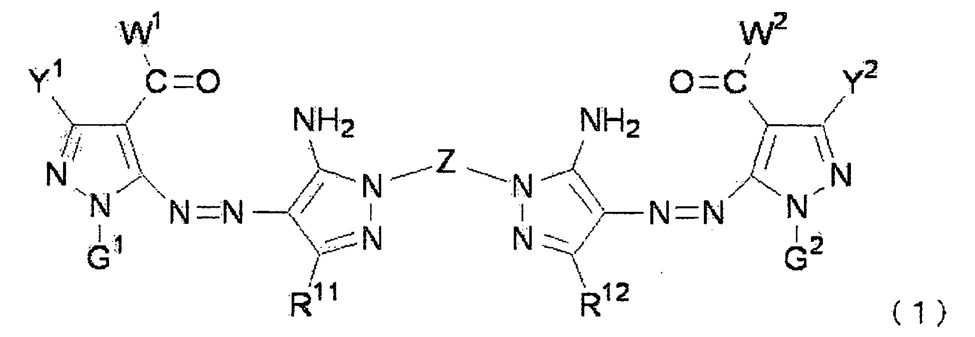

In formula (1), Z represents a divalent group derived from a 5- to 8-membered nitrogen-containing heterocyclic ring; Y¹ Y², R¹¹ and R¹² each independently represent a hydrogen atom or a substituent; G¹ and G² each independently represent a hydrogen atom, an alkyl group, a cycloalkyl group, an aralkyl group, an alkenyl group, an alkynyl group, an aryl group or a heterocyclic group; and W¹ and W² each independently represent an alkoxy group, an amino group, an alkyl group or an aryl group.

In formula (1), Z represents a divalent group derived from a 5- to 8-membered nitrogen-containing heterocyclic ring. Preferred examples of the nitrogen-containing heterocyclic ring include, irrespective of the position of substitution, a pyrrole ring, a pyrazole ring, a triazole ring, an imidazole ring, a thiazole ring, an isothiazole ring, an oxazole ring, an isoxazole ring, a thiadiazole ring, a thiophene ring, a furan ring, a pyridine ring, a pyrimidine ring, a triazine ring, and a pyridazine ring. The nitrogen-containing heterocyclic ring is more preferably a 6-membered nitrogen-containing heterocyclic ring, and examples thereof include a pyridine ring, a pyrimidine ring, and an s-triazine ring. A particularly preferred substituent for Z is a divalent group derived from a pyrimidine ring.
When Z is a 6-membered nitrogen-containing heterocyclic ring, it is preferable from the viewpoint that the intramolecular and intermolecular action of the dye molecules is further enhanced in terms of hydrogen bondability and molecular planarity.
The divalent group derived from a 5- to 8-membered nitrogen-containing heterocyclic ring represented by Z may be further fused with another ring.

When Y¹ and Y² each represent a substituent, examples of the substituent include a halogen atom, an alkyl group (this is a linear, branched or cyclic, substituted or unsubstituted alkyl group, and also includes a cycloalkyl group, a bicycloalkyl group, a tricyclo structure having more ring structures, and the like. The alkyl group within a substituent that will be described below (for example, the alkyl group in an alkoxy group, an alkylcarbonyl group, an alkylsulfonyl group or the like) also represents the alkyl group of such concept), an aralkyl group, an alkenyl group, an alkynyl group, an aryl group, a heterocyclic group, a cyano group, a hydroxyl group, a nitro group, an alkoxy group, an aryloxy group, a silyloxy group, a heterocyclic oxy group, an acyloxy group, a carbamoyloxy group, an alkoxycarbonyloxy group, an aryloxycarbonyloxy group, an amino group, an acylamino group, an aminocarbonylamino group, an alkoxycarbonylamino group, an aryloxycarbonylamino group, a sulfamoylamino group, an alkyl- or arylsulfonylamino group, a mercapto group, an alkylthio group, an arylthio group, a heterocyclic thio group, a sulfamoyl group, an alkyl- or arylsulfinyl group, an alkyl- or arylsulfonyl group, an acyl group, an aryloxycarbonyl group, an alkoxycarbonyl group, a carbamoyl group, an aryl or heterocyclic azo group, an imide group, a phosphino group, a phosphinyl group, a phosphinyloxy group, a phosphinylamino group, and a silyl group.
Particular preferred examples of Y¹ and Y² include a hydrogen atom, an alkyl group (for example, a methyl group), an aryl group (for example, a phenyl group), a heterocyclic group (for example, a 2-pyridyl group), and an alkylthio group (for example, a methylthio group), and more preferred examples include a hydrogen atom, a methyl group, a phenyl group, and a methylthio group. Among them, a hydrogen atom is most preferred. Y¹ and Y² may be identical with or different from each other.

In formula (i), R¹¹ and R¹² each represent a hydrogen atom or a substituent. Examples of the substituent used in the case where R¹¹ and R¹² each represent a substituent, include a linear or branched alkyl group having 1 to 12 carbon atoms (for example, methyl, ethyl, n-propyl, i-propyl, n-butyl, i-butyl, sec-butyl, t-butyl, 2-ethylhexyl, 2-methylsulfonylethyl, 3-phenoxypropyl, or trifluoromethyl), a linear or branched aralkyl group having 7 to 18 carbon atoms (for example, benzyl), a linear or branched alkenyl group having 2 to 12 carbon atoms (for example, vinyl), a linear or branched alkynyl group having 2 to 12 carbon atoms (for example, ethynyl), a linear or branched cycloalkyl group having 3 to l2 carbon atoms (for example, cyclopentyl), a linear or branched cycloalkenyl group having 3 to 12 carbon atoms (for example, cyclopentenyl), a halogen atom (for example, a chlorine atom or a bromine atom), an aryl group (for example, phenyl, 4-t-butylphenyl, or 2,4-di-t-amylphenyl), a heterocyclic group (for example, imidazolyl, pyrazolyl, triazolyl, 2-furyl, 2-thienyl, 2-pyrimidinyl, or 2-benzothiazolyl), a cyano group, a hydroxy group, a nitro group, a carboxy group, an amino group, an alkyloxy group (for example, methoxy, ethoxy, 2-methoxyethoxy, or 2-methylsulfonylethoxy), an aryloxy group (for example, phenoxy, 2-methylphenoxy, 4-t-butylphenoxy, 3-nitraphenoxy, 3-t-butyloxycarbonylplzenoxy or 3-methoxycarbonylphenyloxy), an acylamino group (for example, acetamide, benzamide or 4-(3-t-butyl-4-hydroxyphenoxy)butanamide), an alkylamino group (for example, methylamino, butylamino, diethylamino or methylbutylamino), an arylamino group (for example, phenylamino or 2-chloroanilino), an ureido group (for example, phenylureido, methylureido, or N,N-dibutylureido), a sulfamoylamino group (for example, N,N-dipropylsulfamoylamino), an alkylthio group (for example, methylthio, octylthio, or 2-plaenaxyethylthio), an arylthio group (for example, phenylthio, 2-butoxy-5-t-octylphenylthio or 2-carboxyphenylthio), an alkyloxycarbonylamino group (for example, methoxycarbonylamino), an alkylsulfonylamino group and arylsulfonylamino group (for example, methylsulfonylamino, phenylsulfonylamino or p-toluenesulfonylamino), a carbamoyl group (for example, N-ethylcarbamoyl or N,N-dibutylcarbamoyl), a sulfamoyl group (for example, N-ethylsulfamoyl, N,N-dipropylsulfamoyl or N-phenylsulfamoyl), a sulfonyl group (for example, methylsulfonyl, octylsulfonyl, phenylsulfonyl or p-toluenesulfonyl), an alkyloxycarbonyl group (for example, methoxycarbonyl or butyloxycarbonyl), a heterocyclic oxy group (for example, 1-phenyltetrazole-5-oxy or 2-tetrahydropyranyloxy)., an azo group (for example, phenylazo, 4-methoxyphenylazo, 4-pivaloylaminophenylazo, or 2-hydroxy-4-propanaylphenylazo), an acyloxy group (for example, acetoxy), a carbamoyloxy group (for example, N-methylcarbamoyloxy, or N-phenylcarbamoyloxy), a silyloxy group (for example, trimethylsilyloxy or dibutylmethylsiiyloxy), an aryloxycarbonylamino group (for example, phenoxycarbonylamino), an imide group (for example, N-succinimide or N-phthalimide), a heterocyclic thio group (for example, 2-benzothiazolylthio, 2,4-diphenoxy-l,3.5-triazole-6-thio, or 2-pyridyithio), a sulfinyl group (for example, 3-phenoxypropylsulfinyl), a phosphonyl group (for example, phenoxyphosphonyl, octyloxyphosphonyl, or phenylphosphonyl), an aryloxycarbonyl group (for example, phenoxycarbonyl), an acyl group (for example, acetyl, 3-phenylpropanoyl, or benzoyl), and an ionic hydrophilic group (for example, a carboxyl group, a sulfo group, a phosphono group or a quaternary ammonium group).

In formula (1), preferred examples of R¹¹ and R ¹² include a substituted or unsubstituted acylamino group having 1 to 8 carbon atoms in total, a substituted or unsubstituted alkyl group having 1 to 12 carbon atoms in total, a substituted or unsubstituted aryl group having 6 to 18 carbon atoms in total, and a substituted or unsubstituted heterocyclic group having 4 to 12 carbon atoms in total. A more preferred example is a linear alkyl or branched alkyl group having 1 to 8 carbon atoms in total, and an even more preferred example is a methyl group or a t-butyl group. Among them, a t-butyl group in particular is most preferred.
When R¹¹ and R¹² are substituted by a linear alkyl group or branched alkyl group having a small total carbon number (for example, a carbon number of 1 to 4), superior color, coloring power and image robustness may be achieved.
Furthermore, R¹¹ and R ¹² may be identical with or different from each other.

G¹ and G² each represent a hydrogen atom, an alkyl group, a cycloalkyl group, an aralkyl group, an alkenyl group, an alkynyl group, an aryl group or a heterocyclic group, and in particular, preferred examples include a hydrogen atom, a methyl group, an ethyl group, an n-propyl group, an i-propyl group, a t-butyl group, a cyclopropyl group, a benzyl group, a 2-phenethyl group, a vinyl group, an allyl group, an ethynyl group, a propargyl group, a phenyl group, a p-tolyl group, a naphthyl group, a pyridyl group, a pyrimidinyl group, and a pyrazinyl group. More preferred examples include a hydrogen atom, a methyl group, a phenyl group, a pyridyl group, a pyrimidinyl group, and a pyrazinyl group, and among them, a methyl group, a 2-pyridyl group, a 2,6-pyrimidinyl group, and a 2,5-pyrazinyl group are preferred.
When G¹ and G² each represent an alkyl group, the alkyl group is preferably an alkyl group having 5 or fewer carbon atoms in total, more preferably an alkyl group having 3 or fewer carbon atoms in total, and most preferably a methyl group. G¹ and G² may be identical with or different from each other.

In formula (l). W¹ and W² each represent an alkoxy group, an amino group, an alkyl group or an aryl group.
The alkoxy group represented by W¹ and W² is preferably a substituted or unsubstituted alkoxy group having 1 to 30 carbon atoms, and particularly preferably a substituted or unsubstituted alkoxy group having 1 to 5 carbon atoms. Examples thereof include a methoxy group, an ethoxy group, an i-propoxy group, a t-butoxy group, an n-octyloxy group and a 2-methoxyethoxy group.

The amino group represented by W¹ and W² includes a substituted amino group such as an alkylamino group, an arylamino group or a heterocyclic amino group, and preferred examples of the amino group include an unsubstituted amino group, a substituted or unsubstituted alkylamino group having 1 to 30 carbon atoms, and a substituted or unsubstituted anilino group having 6 to 30 carbon atoms. Among them, an unsubstituted amino group, a substituted or unsubstituted alkylamino group having 1 to 8 carbon atoms, and a substituted or unsubstituted anilino group having 6 to 18 carbon atoms are preferred, and an unsubstituted amino group, a substituted or unsubstituted alkylamino group having 1 to 4 carbon atoms, and a substituted or unsubstituted anilino group having 6 to 12 carbon atoms are more preferred. Examples thereof include an unsubstituted amino group (-NH₂), a methylamino group (-NHCH.₃), a dimethylamino group {-N(CH₃)₂}, an anilino group (-NHPh), an N-methylanilino group {-N(CH₃)Ph}, and a diphenylamino group f -N(Ph)₂),

The alkyl group represented by W¹ and W² may independently be a linear, branched or cyclic, substituted or unsubstituted alkyl group, which also includes a cycloalkyl group, a bicycloalkyl group and a tricyclo structure having more ring structures. Specifically, the alkyl group is preferably an alkyl group having 1 to 30 carbon atoms, and examples thereof include a methyl group, an ethyl group, an n-propyl group, an i-propyl group, a t-butyl group, an n-octyl group, an eicosyl group, a 2-chloroethyl group, a 2-cyanoethyl group, and a 2-ethylhexyl group. The cycloalkyl group is preferably a substituted or unsubstituted cycloalkyl group having 3 to 30 carbon atoms, and examples thereof include a cyclohexyl group, a cyclopentyl group, and a 4-n-dodecylcyclohexyl group. The bicycloalkyl group is preferably a substituted or unsubstituted bicycloalkyl group having 5 to 30 carbon atoms, that is, a monovalent group obtained by removing one hydrogen atom from a bicycloalkane having 5 to 30 carbon atoms, and examples thereof include a bicyclo[1.2.2]heptan-2-yl group and a bicyclo[2.2.2]octan-3-yl group.

The aryl group represented by W¹ and W² may be preferably a substituted or unsubstituted aryl group having 6 to 30 carbon atoms, and among them, a substituted or unsubstituted aryl group having 6 to 18 carbon atoms is preferred, while a substituted or unsubstituted aryl group having 6 to 12 carbon atoms is more preferred. Examples thereof include a phenyl group, a p-tolyl group, a naphtyl group, a m-chlorophenyl group, and an O-hexadecanoylaminophenyl group.

Among them, preferred examples of the substituent for W¹ and W² include an alkoxy group (for example, a methoxy group, an ethoxy group, an i-propoxy group, or a t-butoxy group), an amino group (for example, an unsubstituted amino group, a methylamino group, a dimethylamino group or an anilino group), an alkyl group (for example, a methyl group, an ethyl group, an n-propyl group, an i-propyl group, a t-butyl group or a cyclopropyl group), and an aryl group (for example, a phenyl group, a p-tolyl group, or a naphthyl group). Among them, an alkoxy group, an amino group, a phenyl group and an alkyl group are preferred, and an alkoxy group and an amino group are more preferred.
The substituent for W¹ and W² is more preferably an alkoxy group having 5 or fewer carbon atoms in total, an unsubstituted amino group, or an alkylamino group having 5 or fewer carbon atoms in total. When W¹ and W² each represent an alkoxy group having 5 or fewer carbon atoms in total, an unsubstituted amino group, or an alkylamino group having 5 or fewer carbon atoms, the dye molecules may easily form at least one of intramolecular hydrogen bonding and intermolecular hydrogen bonding more firmly, and it is preferable in view of satisfactory color and high robustness (for example, light resistance, gas resistance, heat resistance, water resistance and chemical resistance).
Particularly preferred substituents from the viewpoint of color, light fastness and solvent resistance include an alkoxy group having 3 or fewer carbon atoms in total, an unsubstituted amino group (-NH₂ group), and an alkylamino group having 3 or fewer carbon atoms in total. Among them, a methoxy group (-OCH₃ group) and an ethoxy group (-OC₂H₅ group) in particular are preferred, and from the viewpoint of obtaining satisfactory color and improving light fastness, a methoxy group is particularly preferred.
W¹ and W² may be identical with or different from each other.

According to the invention, when Z, Y¹, Y², R¹¹, R¹², G¹, G², W¹ and W² are each further substituted with a substituent, examples of the substituent include the following substituents.
Examples include a halogen atom, an alkyl group, an aralkyl group, an alkenyl group, an alkynyl group, an aryl group, a heterocyclic group, a cyano group, a hydroxy group, a nitro group, an alkoxy group, an aryloxy group, a silyloxy group, a heterocyclic oxy group, an acyloxy group, a carbamoyloxy group, an alkoxycarbonyloxy group, an aryloxycarbonyloxy group, an amino group, an acylamino group, an aminocarbonylamino group, an alkoxycarbonylamino group, an aryloxycarbonylamino group, a sulfamoylamino group, an alkyl- or arylsulfonylamino group, a mercapto group, an alkylthio group, an arylthio group, a heterocyclic thio group, a sulfamoyl group, an alkyl- or arylsulfinyl group, an alkyl-- or arylsulfonyl group, an acyl group, an aryloxycarbonyl group, an alkoxycarbonyl group, a carbamoyl group, an aryl or heterocyclic azo group, an imide group, a phosphino group, a phosphinyl group, a phosphinyloxy group, a phosphinylamino group and a silyl group.

The scope of the azo pigment in the invention also includes tautomers of the azo pigment represented by the formula (1). The formula (1) is represented in the form of an intrinsic structural formula among various kinds of tautomer that may be adopted as a chemical structure; however, the formula (1) may be a tautomers other than the described structure, or a mixture containing plural tautomers may also be used.
For example, a tautomer of azo-hydrazone represented by the following formula (1') may be considered as the azo pigment represented by the formula (1).
The invention is intended to include a compound represented by the following formula (1'), which is a tautomer of the azo pigment represented by the formula (I), in the scope of the invention.

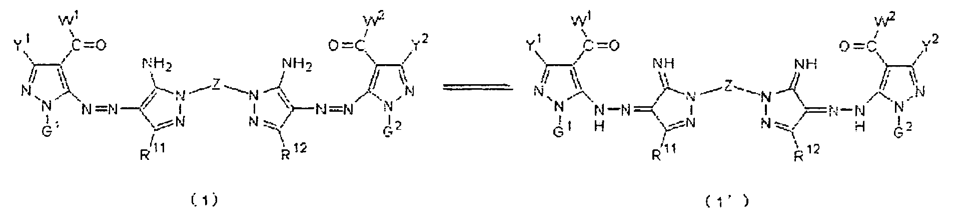

R¹¹, R¹², W¹, W², Y¹, Y², G¹, G² and Z in formula (1') have the same definitions as R¹¹, R¹², W¹, W², Y¹, Y², G¹, G² and Z in the formula (1), respectively.

In regard to the combination of preferred substituents of the compound represented by the formula (1), preferred is a compound in which at least one of the various substituents is selected from the preferred groups described above, more preferred is a compound in which more of the various substituents are selected from the preferred groups described above, and most preferred is a compound in which all of the substituents are selected from the preferred groups described above.

A particularly preferred combination for the azo pigment represented by the formula (1) of the invention includes at least one of the following items (A) to (E).

(A) W¹ and W² preferably each independently represent an alkoxy group (for example, a methoxy group, an ethoxy group, an i-propoxy group, or a t-butoxy group), an amino group (for example, an unsubstituted amino group, a methylamino group, a dimethylamino group, or an anilino group), an alkyl group (for example, a methyl group, an ethyl group, an n-propyl group, an i-propyl group, a t-butyl group, or a cyclopropyl group), or an aryl group (for example, a phenyl group, a p-tolyl group, or a naphthyl group). Among them, W¹ and W² each represent, more preferably, an alkoxy group, an amino group or an alkyl group; more preferably an alkoxy group or an amino group; even more preferably an alkoxy group having 5 or fewer carbon atoms in total, an unsubstituted amino group, or an alkylamino group having 5 or fewer carbon atoms in total; and particularly preferably an alkoxy group having 3 or fewer carbon atoms in total, an unsubstituted amino group, or an alkylamino group having 3 or fewer carbon atoms in total. Among them, a methoxy group (-OCH₃ group) in particular is most preferred.

(B) R¹¹ and R¹² preferably each independently represent a hydrogen atom or a substituent (for example, a substituted or unsubstituted acylamino group having 1 to 8 carbon atoms in total, a substituted or unsubstituted alkyl group having 1 to 12 carbon atoms in total, a substituted or unsubstituted aryl group having 6 to 18 carbon atoms in total, or a substituted or unsubstituted heterocyclic group having 4 to 12 carbon atoms in total). R¹¹ and R¹² each represent, more preferably, a linear alkyl group or branched alkyl group having 1 to 8 carbon atoms in total; and even more preferably a methyl group, an i-propyl group or a tert-butyl group. Among them, a tert-butyl group in particular is most preferred,

(C) Z represents a divalent group derived from a 5- to 8-membered nitrogen-containing heterocyclic group, which may be further fused with another ring. The nitrogen-containing heterocyclic ring for Z is a 5- or 6-membered substituted or unsubstituted nitrogen-containing heterocyclic ring, and preferred examples thereof include a pyrrole ring, a pyrazole ring, a triazole ring, an imidazole ring, a thiazole ring, an isothiazole ring, an oxazole ring, an isoxazole ring, a thiadiazole ring, a thiophene ring, a furan ring, a pyridine ring, a pyrimidine ring, a triazine ring, and a pyridazine ring, and particularly preferred examples include a 6-membered nitrogen-containing heterocyclic group having 3 to 10 carbon atoms. Even more preferred examples of a heterocyclic ring include a pyridine ring, a pyrimidine ring, an s-triazine ring, a pyridazine ring, and a pyrazine ring; still more preferred examples include a pyridine ring, a pyrimidine ring, an s-triazine ring, a pyridazine ring and a pyrazine ring; and even more preferred examples include a pyrimidine ring and an s-triazine ring. Among them, a pyrimidine ring in particular is most preferred.

(D) G¹ and G² each independently represent a hydrogen atom, an alkyl group, a cycloalkyl group, an aralkyl group, an alkenyl group, an alkynyl group, an aryl group or a heterocyclic group. Particularly preferably, preferred examples thereof include a hydrogen atom, a methyl group, an ethyl group, an n-propyl group, an i-propyl group, a t-buty group, a cyclopropyl group, a benzyl group, a 2-phenethyl group, a vinyl group, an allyl group, an ethynyl group, a propargyl group, a phenyl group, a p-tolyl group, a naphthyl group, a pyridyl group, a pyrimidinyl group, and a pyrazinyl group; more preferred examples include a hydrogen atom, a methyl group, a phenyl group, a pyridyl group, a pyrimidinyl group, and a pyrazinyl group; and even more preferred examples among them include a methyl group, a 2-pyridyl group, a 2,6-pyrimidinyl group and a 2,5-pyrazinyl group.
The alkyl group represented by G¹ and G² is more preferably an alkyl- group having 5 or fewer carbon atoms in total, more preferably an alkyl group having 3 or fewer carbon atoms in total, and most preferably a methyl group.

(E) Y¹ and Y² each independently represent a hydrogen atom, an alkyl group (for example, a methyl group), an aryl group (for example, a phenyl group); a heterocyclic group (for example, a 2-pyridyl group), or an alkylthio group (for example, a methylthio group): and preferably a hydrogen atom, a methyl group, a phenyl group or a methylthio group. Among them, a hydrogen atom is particularly preferred.

Among the azo pigments represented by the formula (I) according to the invention, an azo pigment represented by the following formula (2) is preferred.

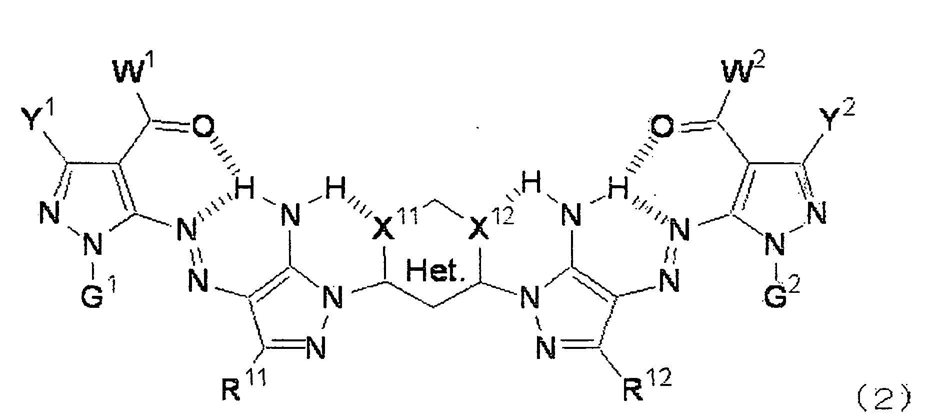

G¹, G², R¹¹, R¹², W¹, W², Y¹ and Y² in formula (2) have the same definitions as G¹, G², R¹¹, R¹², W¹, W², Y¹ and Y².. R¹¹, R¹² , W¹, W², Y¹ and Y² in the formula (1), respectively.
X¹¹ and X¹² each independently represent a heteroatom in the divalent group (Het.) derived from the nitrogen-containing heterocyclic compound represented by Z in the formula (1).

According to the invention, a number of tautomers may be considered with regard to the azo pigment represented by the formula (1).
Furthermore, according to the invention, the azo pigment represented by the formula (1) preferably has a substituent which forms an intramolecular hydrogen bond or an intramolecular cross-hydrogen bond. The azo pigment represented by the formula (1) according to the invention preferably has a substituent which forms at least one or more intramolecular cross-hydrogen bonds; more preferably has a substituent which forms at least three or more intramolecular hydrogen bonds; and particularly preferably has a substituent which forms at least three or more intramolecular hydrogen bonds, while at least two of such hydrogen bonds form intramolecular cross-hydrogen bonds.

Among the azo pigments that are represented by the formula (1), such a particularly preferred example of the formula for the azo pigment as described above may be the azo pigment represented by the formula (2).
One of the reasons why this structure is considered preferable is that the nitrogen atom, hydrogen atom and heteroatom constituting a heterocyclic ring contained in the azo pigment structure such as represented by the formula (2) (the nitrogen atom of an azo group, or of a hydrazone group which is a tautomer thereof; the oxygen atom of a carbonyl group; or the nitrogen atom of an amino group) may easily form at least one or more intramolecular cross-hydrogen bonds (intramolecular hydrogen bonds).
Another reason why these structures are considered preferable is that, as shown by the formula (2), the nitrogen atom constituting a heterocyclic group, the hydrogen atom of an amino group, and the heteroatom (for example, the nitrogen atom of an azo group, or of a hydrazone group which is a tautomer thereof; the oxygen atom of a carbonyl group; or the nitrogen atom of an amino group) that are contained in the azo pigment, may easily form at least four or more intramolecular hydrogen bonds, while those atoms may easily form at least two or more intramolecular cross-hydrogen bonds.
As a result, the planarity of the molecule is augmented, and the intramolecular/intermolecular interaction is further enhanced. Thus, for example, the crystallinity of the azo pigment represented by the formula (2) is increased (capable of forming a structure of higher order more easily), and the performances required of a pigment, such as light fastness, thermal stability, moisture thermal stability, water resistance, gas resistance and/or solvent resistance, are enhanced to a large extent. Therefore, the azo pigment of the formula (2) constitutes the most preferred example.

The azo pigment according to the invention may contain an isotope (for example, ²H, ³H, ¹³ C or ¹⁵N) within the compound represented by the formula (1).

Specific examples of the azo pigment represented by the formula (1) will be presented below as Fig.-1 to Pig.-48, but the azo pigment used in the invention is not intended to be limited to the following examples. Furthermore, although the structures of the following specific examples are represented in the form of an intrinsic structural formula among the various kinds of tautomers that can be adopted as chemical structure, it is a matter of fact that any tautomeric structure other than the structures described below may also be used.

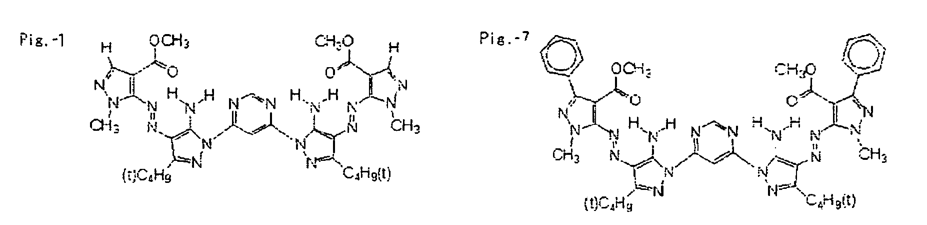

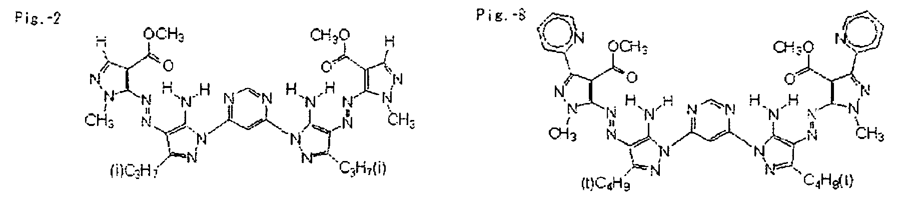

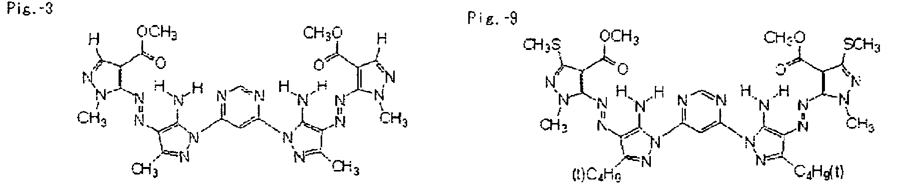

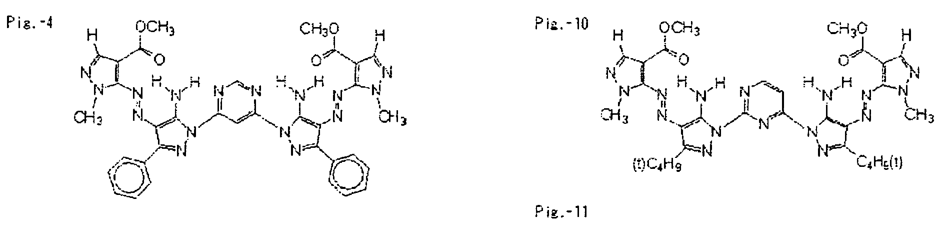

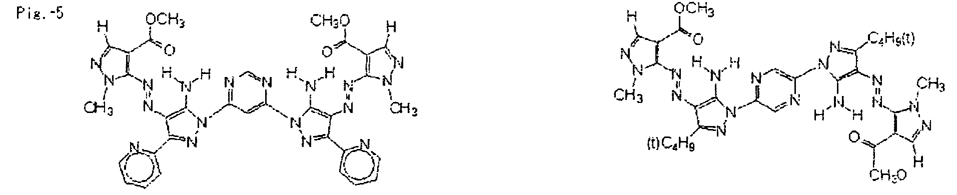

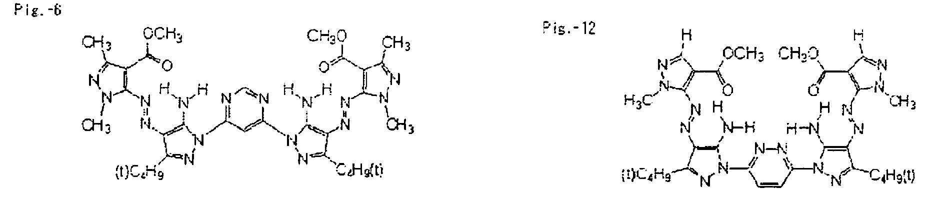

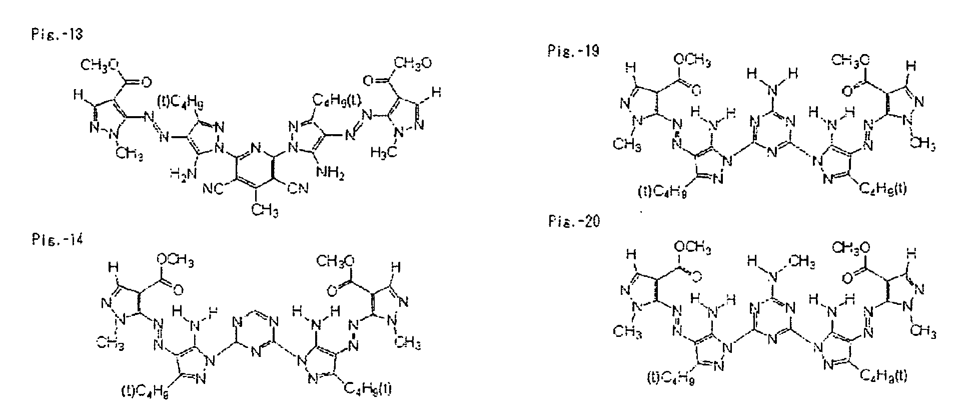

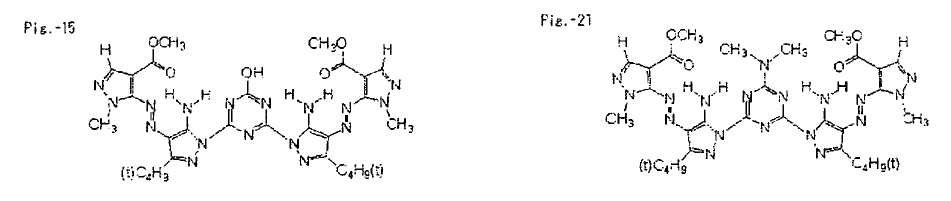

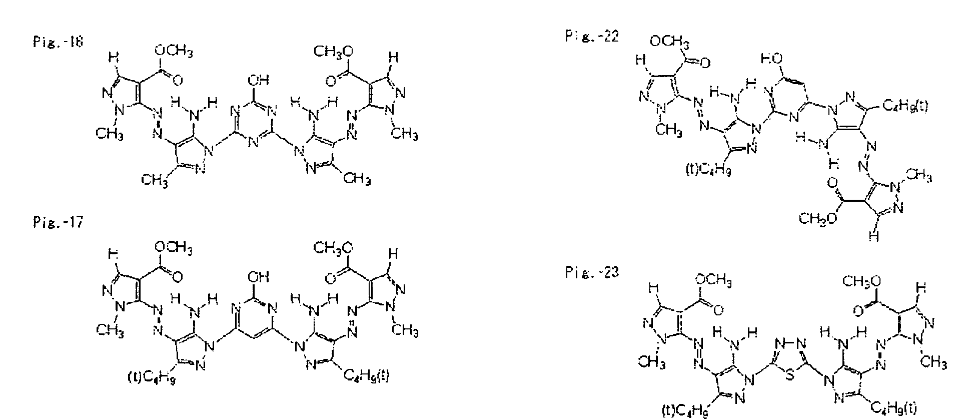

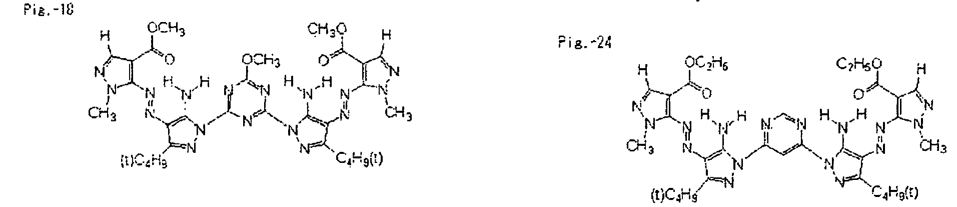

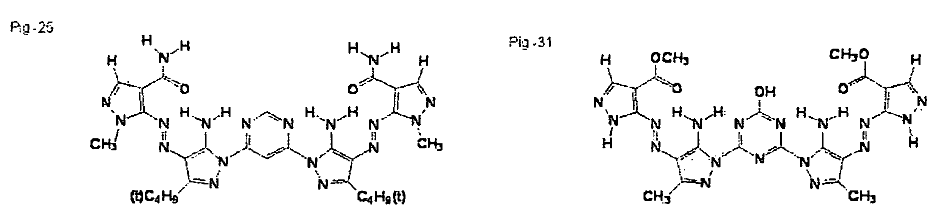

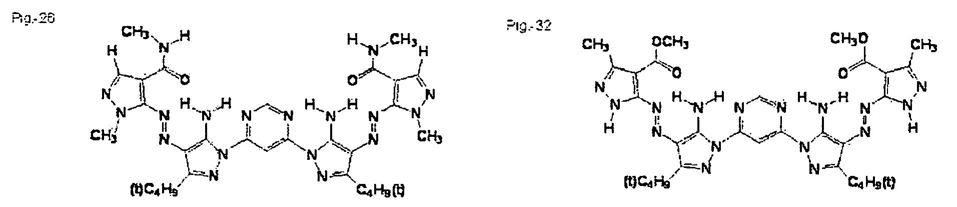

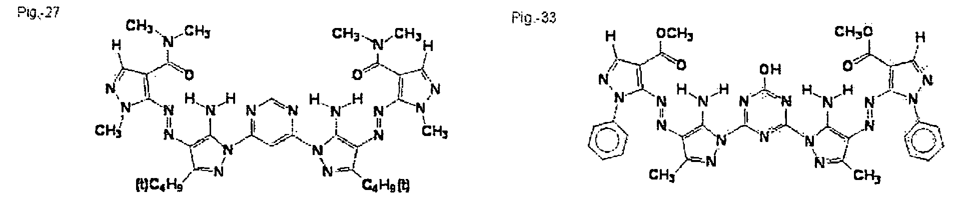

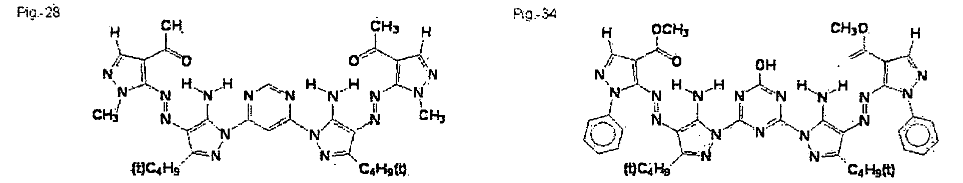

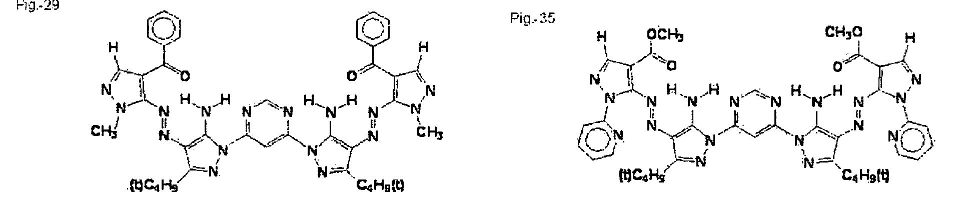

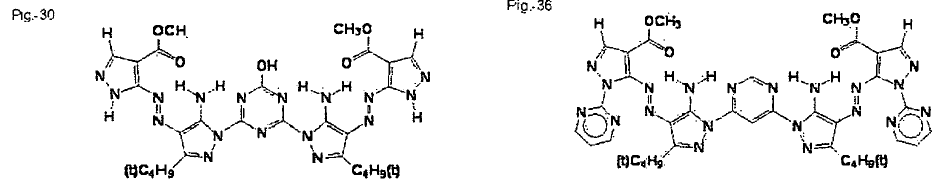

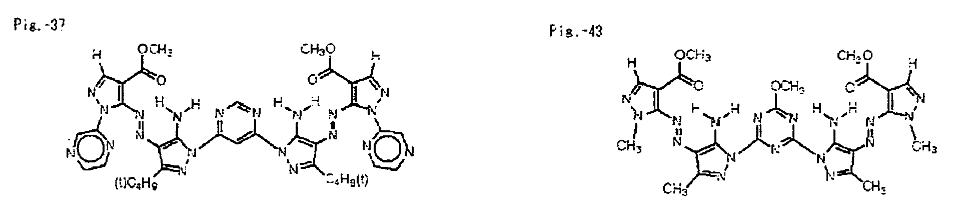

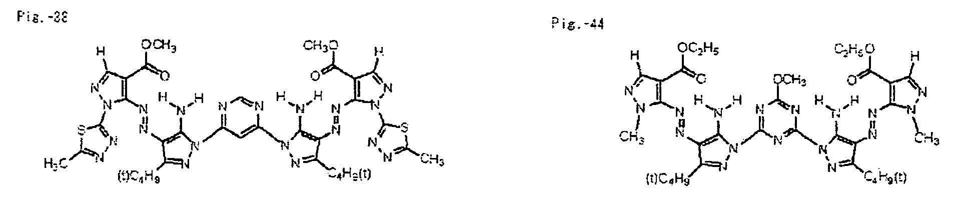

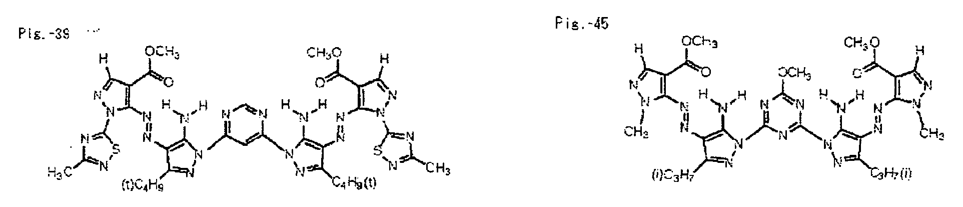

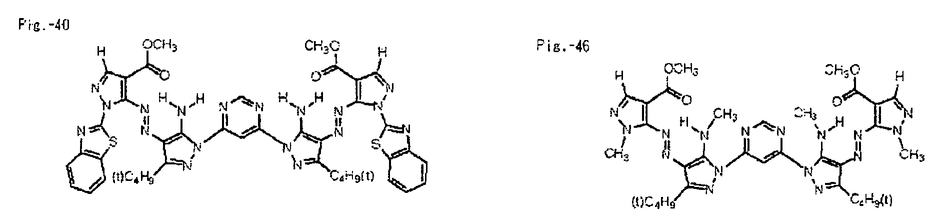

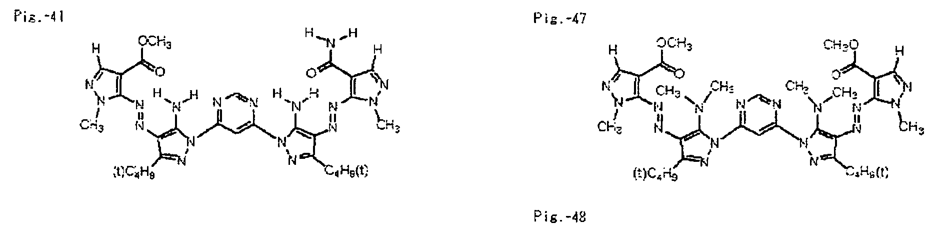

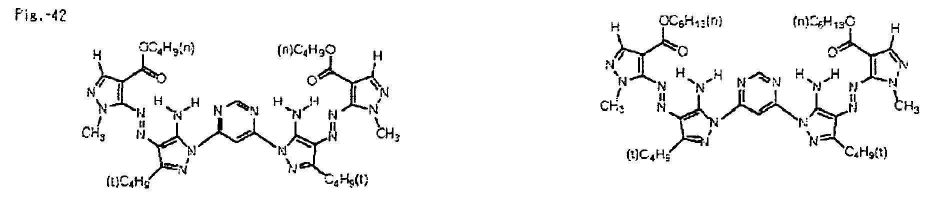

The azo pigment represented by the formula (I) according to the invention is such that any compound having a chemical structure represented by the formula (1), or a tautomer thereof, will be acceptable, and there are no particular limitations on the crystalline form. For example, even an azo pigment having any kind of crystalline form called polymorph (crystalline polymorph) may also be used.

A crystalline polymorph refers to a group of crystals which have an identical chemical composition but have different arrangements of the building blocks (molecules or ions) within the crystal. The chemical and physical properties of a crystalline polymorph are determined by the crystalline structure, and various forms of a crystalline polymorph may be respectively distinguished based on the rheological properties, color tone and other color characteristics. Furthermore, different forms of a crystalline polymorph may be identified by X-ray diffraction (powder X-ray diffraction analysis results) or X-ray analysis (X-ray crystallographic analysis results).
When the azo pigment represented by the formula (1) according to the invention is a crystalline polymorph, the crystalline form may be any single polymorphic form, or may be a mixture of two or more kinds of polymorphic forms; however, it is preferable that the crystal form have a single form as a main component. That is, it is preferable that a less amount of a crystalline polymorph be incorporated, and the content of an azo pigment having a single crystalline form is preferably 70% by mass to 100% by mass, more preferably 80% by mass to 100% by mass, even more preferably 90% by mass to 100% by mass, still more preferably 95% by mass to 100% by mass, and particularly preferably 100% by mass, relative to the total amount of the azo pigment.

When an azo pigment having a single crystalline form is contained as a main component, regularity in the arrangement of colorant molecules is enhanced, and the intramolecular/intermolecular interaction is intensified, so that a three-dimensional network of higher order is likely to be formed. As a result, the performances required of a pigment, such as color, light fastness, heat fastness, moisture fastness, oxidative gas fastness and solvent resistance, are enhanced, which is preferable.
The mixing ratio of crystalline polymorphic forms in the azo pigment may be analyzed from solid-state physicochemical measurements such as single crystal X-ray crystallographic analysis, powder X-ray diffraction (XRD), microscopic photographs (TEM) of crystals, and IR (KBr method).

According to the invention, when the azo pigment represented by the formula (1) has an acid group, a part or all of the acid groups may be in a salt form, or a pigment in a salt form and a pigment in a free acid form may be co-present. Examples of the salt form include salts of alkali metals such as Na, Li and K; salts of ammonium which may be substituted with an alkyl group or a hydroxyalkyl group; and salts of organic amines. Examples of the organic amines include a lower alkylamine, a hydroxy-substituted lower alkylamine, a carboxy-substituted lower alkylamine, and a polyamine having 2 to 10 units of an alkyleneimine having 2 to 4 carbon atoms. In the case of these salt forms, the kind of salt is not limited to a single kind, and plural kinds may be co-present.

Moreover, in regard to the structure of the azo pigment used in the invention, in the case where plural acid groups are contained in one molecule, the plural acid groups are each independently in a salt form or in an acid form, and may be different from each other.

According to the invention, the azo pigment represented by the formula (1) may be a hydrate containing water molecules in the crystal, and there are no particular limitations on the number of water molecules included in the crystal.

Next, an example of the method for producing the azo pigment represented by the formula (1) will be described. For example, the azo pigment represented by the formula (1) may be produced by, for example, converting a heterocyclic amine represented by the following formula (A) into diazonium under acidic conditions, subjecting the diazonium and a compound represented by the following formula (B) to a coupling reaction, and carrying out a post-treatment according to conventional methods.

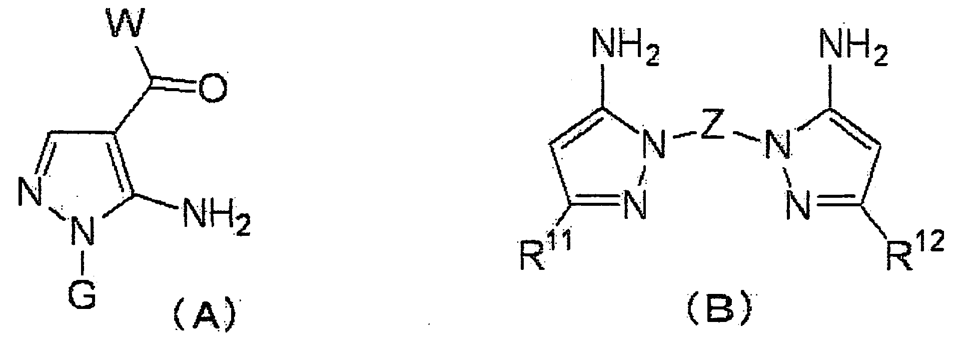

In formulas (A) and (B), W has the same definition as W¹ and W² in the formula (l); G has the same definition as G¹ and G² in the formula (1); and R¹¹, R¹² and Z have the same definitions as R¹¹, R¹² and Z in the formula (1), respectively.

The heterocyclic amine represented by the formula (A) may be generally produced by a known conventional method, for example, a method described in Helv, Chin. Acta, 41, 1958, 1052-1056; Helv. Chin. Acta, 42, 1959, 349-352; or the like, or a method equivalent thereto.
Furthermore, the compound represented by the formula (B) may be produced by a method described in WO 06/082669 or JP-A-2006-57076, or a method equivalent thereto.

The diazonation reaction of the heterocyclic amine represented by the formula (A) may be carried out by, for example, allowing a reagent such as sodium nitrite, nitrosylsulfuric acid or isoamyl nitrite to react in an acidic solvent such as sulfuric acid, phosphoric acid, acetic acid, hydrochloric acid or methanesulfonic acid, at a temperature of 15°C or lower for about 10 minutes to 6 hours.
The coupling reaction may be carried out by allowing the diazonium salt obtained by the method described above and a compound represented by the formula (B) to react at a temperature of 40°C or lower, and preferably 25°C or lower, for about 10 minutes to 12 hours.

The reaction product thus obtained may be obtained as precipitated crystals, but in general, crystals may be precipitated by adding water or an alcohol-based solvent to the reaction liquid, and collected by filtration. Furthermore, crystals may be precipitated by adding an alcohol-based solvent, water or the like to the reaction liquid, and the crystals thus precipitated may be collected by filtration. The crystals thus collected by filtration may be washed and dried as necessary, and thereby the azo pigment represented by the formula (1) may be obtained.

The azo pigment represented by the formula (1) may be obtained as a crude azo pigment (crude) according to the production method described above, but when the azo pigment is used in the invention as a coloring material, it is preferable to carry out a post-treatment. Examples of the method of this post-treatment include a pigment particle control process involving a solvent heating treatment, a milling treatment such as solvent salt milling, salt milling, dry milling, solvent milling or acid pasting, or the like; and a surface treatment process involving the use of a resin, a surfactant and a dispersant.

The azo pigment represented by the formula (1) of the invention is preferably subjected to a solvent heating treatment and/or solvent salt milling as a post-treatment.
Examples of the solvent used in the solvent heating treatment include water; an aromatic hydrocarbon-based solvent such as toluene or xylene; a halogenated hydrocarbon-based solvent such as chlorobenzene or o-dichlorobenzene; an alcohol-based solvent such as isopropanol or isobutanol; an aprotic polar organic solvent such as N,N-dimethylformamide, N.N-dimethylacetamide, or N-methyl-2-pyrrolidone; glacial acetic acid, pyridine, and mixtures thereof. The solvents mentioned above may be further added with an inorganic or organic acid or base. The temperature of the solvent heating treatment may vary with the desired primary particle size of the pigment, but the temperature is preferably 40 to 150°C, and more preferably 60 to 100°C. Furthermore, the treatment time is preferably 30 minutes to 24 hours.

Solvent salt milling may be carried out by, for example, introducing a crude azo pigment, an inorganic salt and an organic solvent that does not dissolve the pigment and the inorganic salt into a kneading machine, and performing kneading and milling in the machine. As the inorganic salt, a water-soluble inorganic salt may be suitably used, and preferred examples of the inorganic salt that may be used include sodium chloride, potassium chloride and sodium sulfate. Furthermore, it is more preferable to use an inorganic salt having an average particle size of 0.5 to 50 µm. The amount of use of the inorganic salt is preferably 3 to 20 times, and more preferably 5 to 15 times, the mass of the crude azo pigment. As the organic solvent, a water-soluble organic solvent may be suitably used, but since a rise in temperature during kneading results in a state in which the solvent is prone to vaporize, a high-boiling point solvent is preferred from the viewpoint of safety.

Examples of such a water-soluble organic solvent include diethylene glycol, glycerin, ethylene glycol, propylene glycol, liquid polyethyelne glycol, liquid polypropylene glycol, 2-(methoxymethoxy)ethanol, 2-butoxyethanol, 2-(isopeiityloxy)ethanol, 2-(hexyloxy)ethanol, diethylene glycol monomethyl ether, diethylene glycol monoethyl ether, diethylene glycol monobutyl ether, triethylene glycol, triethylene glycol monomethyl ether, 1-methoxy-2-propanol, 1-ethoxy-2-propanol, dipropylene glycol, dipropylene glycol monomethyl ether, dipropylene glycol monomethyl ether, dipropylene glycol, and mixtures thereof. The amount of use of the water-soluble organic solvent is preferably 0.1 to 5 times the mass of the crude azo pigment. The kneading temperature is preferably 20 to 130°C, and particularly preferably 40 to 110°C. Examples of the kneading machine that may be used include a kneader and a mix muller.

The content of the coloring material (for example, the azo pigment) used in the invention is preferably 0.1% to 15% by mass, more preferably 0.3% to 8% by mass, and even more preferably 1% to 8% by mass, in the ink composition. The amount of incorporation of the pigment used in the invention is appropriately adjusted in accordance with the kind of the ink composition such as a contrast ink composition.

Furthermore, the volume average particle diameter of the azo pigment (coloring material) used in the invention is preferably 150 nm or less, and more preferably 120 nm or less, from the viewpoint of the stability of the ink composition. When an azo pigment having a volume average particle size of 150 nm or less is used, the effects of the invention may be further enhanced, and thus it is preferable.
The volume average particle size is measured by using a dynamic light scattering method under conventional conditions.

### (Dispersant)

The aqueous ink composition of the invention contains at least one dispersant, and it is preferable that the azo pigment be dispersed in an aqueous medium by the dispersant.
There are no particular limitations on the dispersant according to the invention, and a conventionally used dispersant may be appropriately selected and used. Among them, the dispersant is preferably a synthetic polymer compound from the viewpoint of dispersion stability and ejection restorability of the ink composition, and the dispersant is more preferably a copolymer containing at least one hydrophilic constituent unit and at least one hydrophobic constituent unit. There are no particular limitations on the form of the copolymer, and the copolymer may be a random copolymer or a block copolymer.

Specific examples of the dispersant include polyvinyl alcohols; polyvinylpyrrolidones; acrylic resins such as polyacrylic acid, an acrylic acid-acrylonitrile copolymer, a potassium acrylate-acrylonitrile copolymer, a vinyl acetate-acrylic acid ester copolymer, and an acrylic acid-acrylic acid ester copolymer; styrene-acrylic resins such as a styrene-acrylic acid copolymer, a styrene-methacrylic acid copolymer, a styrene-methacrylic acid-acrylic acid ester copolymer, a styrene-α-methylstyrene-acrylic acid copolymer, and a styrene-α methylstyrene-acrylic acid-acrylic acid ester copolymer; a styrene-maleic acid copolymer, a styrene-maleic anhydride copolymer, a vinylnaphthalene-acrylic acid copolymer, a vinylnaphthalene-maleic acid copolymer; vinyl acetate-based copolymers such as a vinyl acetate-ethylene copolymer, a vinyl acetate-fatty acid vinyl ethylene copolymer, a vinyl acetate-maleic acid ester copolymer, a vinyl acetate-crotonic acid copolymer, and a vinyl acetate-acrylic acid copolymer, and salts thereof.
These compounds may be used singly during the use, or two or more kinds may be used in mixture.

When the dispersant is in the form of a salt, examples of the base that forms a salt with the dispersant include diethylamine, ammonia, ethylamine, triethylamine, propylamine, isopropylamine, dipropylamine, butylamine, isobutylamine, triethanolamine, diethanolamine, aminomethylpropanol and morpholine.
Such a salt may be obtained by, for example, a neutralization reaction between the base and the dispersant before forming a salt. At this time, the amount of the compound used to form a salt may be set at, for example, 0.7 to 1.5 equivalents relative to the equivalent for neutralization of the dispersant that is used before forming a salt. Particularly, from the viewpoint that the fixability of the ink to a recording medium after printing the ink composition to the recording medium is enhanced, the amount used is preferably 0.9 to 1.2 equivalents relative to the equivalent for neutralization.

The weight average molecular weight of such a synthetic polymer compound is preferably 1000 to 50,000, more preferably 1000 to 15,000, and even more preferably 3000 to 10,000. Furthermore, the acid value of the synthetic polymer compound is preferably 50 to 300, and more preferably 70 to 150. The synthetic polymer compound is produced according to a known polymerization method such as radical copolymerization or group transfer polymerization.

A natural polymer compound may also be used as the dispersant. Specific examples of the natural polymer compound include proteins such as glue (ejiao), gelatin, casein and albumin; natural rubbers such as gum arabic and tragacanth gum; glucosides such as saponin; alginic acid derivatives such as alginic acid, alginic acid propylene glycol ester, alginic acid triethanolamine, and ammonium alginate; and cellulose derivatives such as methylcellulose, carboxymethylcellulose, hydroxyethylcellulose, and ethylhydroxycellulose.

Commercially available dispersants may also be used, and specific examples include JONCRYL 61J (trade name,molecular weight 10,000, acid value 195), JONCRYL 68 (trade name, molecular weight 10,000, acid value 195), JONCRYL 450 (trade name, molecular weight 10,000 to 20,000, acid value 100), JONCRYL 550 (trade name, molecular weight 7500, acid value 200), JONCRYL 555 (trade name, molecular weight 5000, acid value 200), JONCRYL 586 (trade name, molecular weight 3100, acid value 105), JONCRYL 680 (trade name, molecular weight 3900, acid value 215), JONCRYL 682 (trade name, molecular weight 1600, acid value 235), JONCRYL 683 (trade name, molecular weight 7300, acid value 150), and JONCRYL B-36 (trade name, molecular weight 6800, acid value 250), all of which being manufactured by BASF Japan. The molecular weight used herein represents weight average molecular weight.

According to the invention, a particularly preferable dispersant is a salt of a styrene-(meth)acrylic acid copolymer from the viewpoint of dispersion stability. Such a salt of a styrene-(meth)acrylic acid copolymer represents a compound containing at least the skeleton of styrene and the skeleton of a (meth)acrylic acid salt in the structure, and the compound may also have a skeleton derived from another monomer having an unsaturated group, such as the skeleton of a (meth)aciylic acid ester. In regard to the form of copolymerization, production method, acid value and weight average molecular weight of such a salt of a styrene-(meth)acrylic acid copolymer, the same items mentioned above for the synthetic polymer are applicable.

The dispersant may be added to water and used in the form of emulsion.
The content of the dispersant in the ink composition is preferably 1 to 100 parts by mass, and more preferably 2 to 70 parts by mass, relative to 100 parts by mass of the coloring material (preferably, the azo pigment).

The coloring material (for example, the azo pigment) according to the invention is preferably used as a coloring material dispersion liquid in which the coloring material is dispersed by a dispersant. The coloring material dispersion liquid is prepared by dispersing the coloring material (for example, the azo pigment), the dispersant and an aqueous medium using an appropriate dispersing machine such as a ball mill, a sand mill, an attriter, a roll mill, an agitator mill, a Henschel mixer, a colloid mill, an ultrasonic homogenizer, a jet mill, and an angstrom mill.

As the aqueous medium that may be used in the preparation of the coloring material dispersion liquid, water, an organic solvent, or a mixture of water and an organic solvent may be used. The water used herein is preferably pure water, and examples of the organic solvent include monohydric alcohols such as methanol, ethanol, n-propyl alcohol, isopropyl alcohol, n-butanol, sec-butanol, tert-butanol, isobutanol, and n-pentanol; polyhydric alcohols such as ethylene glycol, diethylene glycol, triethylene glycol, polyethylene glycol, polypropylene glycol, propylene glycol, butylene glycol, 1,2,6-hexanetriol, thioglycol, hexylene glycol, trimethylolethane, and trimethylolpropane; alkyl ethers of polyhydric alcohols, such as ethylene glycol monoethyl ether, ethylene glycol monobutyl ether, diethylene glycol monomethyl ether, diethylene glycol monoethyl ether, diethylene glycol monobutyl ether, triethylene glycol monomethyl ether, triethylene glycol monoethyl ether, and triethylene glycol monobutyl ether; urea, 2-pyrrolidone, N-methyl-2-pyrrolidone, 1,3-dimethyl-2-imidazolidinone and triethanolamine. These organic solvents may be used singly or as a mixture of two or more kinds.

The content of the organic solvent is preferably in the range of 0.5% by mass to 40% by mass, and more preferably in the range of 1.5% by mass to 20% by mass, in the ink composition according to the invention.

### (Water-soluble organic solvent)

The aqueous ink composition of the invention is preferably includes a water-based medium. The water-based medium includes at least water as a solvent, but preferably includes water and at least one water-soluble organic solvent. The water-soluble organic solvent may be used for the purpose of applications as a wetting agent or a penetrating agent.

The wetting agent may effectively prevent clogging of nozzles that may occur as a result of the drying of ink at the nozzle ejection port. The wetting agent is preferably a water-soluble organic solvent having a lower vapor pressure than water.
Specific examples of the wetting agent include glycerin, ethylene glycol, diethylene glycol, triethylene glycol, a polyethylene glycol having a molecular weight of 2000 or less, propylene glycol, dipropylene glycol, tripropylene glycol, 1,3-propylene glycol, isopropylene glycol, isobutylene glycol, 1,4-butanediol, 1,3-butanediol, 1,5-pentanediol, 1,6-hexanediol, mesoerythritol, and pentaerythritol. These wetting agents may be used singly, or two or more kinds may be used in mixture.

When glycerin in particular is used as the wetting agent, the ink composition is not easily solidified due to the high water-solubility and the moisture evaporation suppressive effect of glycerin. Therefore, the effect of preventing clogging at the nozzles of a printer head is enhanced, which is preferable.

The content of the wetting agent is preferably from 0.05% by mass to 30% by mass, and more preferably from 3% by mass to 25% by mass, in the ink composition according to the invention.

The penetrating agent is suitably used for the purpose of allowing efficient penetration of the ink composition into a recording medium (for example, printing paper).
Specific examples of the penetrating agent include alkyl ethers of polyhydric alcohols (glycol ethers), such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol mono-isopropyl ether, diethylene glycol mono-isopropyl ether, ethylene glycol mono-n-butyl ether, ethylene glycol mono-t-butyl ether, diethylene glycol mono-n-butyl ether, triethylene glycol mono-n-butyl ether, diethylene glycol mono-t-butyl ether, 1-methyl-1-methoxybutanol, propylene glycol monomethyl ether, propylene glycol monoethyl ether, propylene glycol mono-t-butyl ether, propylene glycol mono-n-propyl ether, propylene glycol mono-isopropyl ether, propylene glycol mono-n-butyl ether, dipropylene glycol mono-n-butyl ether, dipropylene glycol monomethyl ether, dipropylene glycol monoethyl ether, dipropylene glycol mono-n-propyl ether, and dipropylene glycol mono-isopropyl ether; and diols such as 1,2-pentanediol and 1,2-hexanediol. These penetrating agents may be used singly or as a mixture of two or more kinds.

According to the invention, it is preferable to use 1,2-hexanediol or triethylene glycol monobutyl ether in particular, as the penetrating agent.

The amount of incorporation of the penetrating agent is preferably from 0.1% by mass to 20% by mass, and more preferably from 0.5% by mass to 15% by mass, in the ink composition according to the invention.

The water-soluble organic solvent may also be used in the adjustment of viscosity, in addition to the purposes described above. Specific examples of the water-soluble organic solvent that may be used for the adjustment of viscosity, include an alcohol (for example, methanol, ethanol, propanol, isopropanol, butanol, isobutanol, sec-butanol, t-butanol, pentanol, hexanol, cyclohexanol, or benzyl alcohol), a polyhydric alcohol (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, or thiodiglycol), a glycol derivative (for example, ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monomethyl ether, or ethylene glycol monophenyl ether), an amine (for example, ethanolamine, diethanolamine, triethanolamine, N-methyldiethanolamine, N -ethyldiethanolamine, morpholine, N-ethylmorpholine, ethylenediamine, diethylenetriamine, triethylenetetramine, polyethyleneimine, or tetramethylpropylenediamine), and other polar solvents (for example, formamide, N,N-dimethylformamide, N,N-dimethylacetamide, dimethylsulfoxide, sulfolane, 2-pyrrolidone, N-methyl-2-pyrrolidone, N-vinyl-2-pyrrolidone, 2-oxazolidone, 1 ,3-dimethyl-2-imidazolidinone, acetonitrile, or acetone).

### (Surfactant)

The ink composition of the invention preferably contains at least one surfactant. Regarding such a surfactant, an acetylene glycol-based surfactant represented by the following formula (11) (for example, ORFIN Y, E1010, STG, or SURFINOL 82,104, 440, 465 or 485 (all trade names, manufactured by Nissin Chemical Industry Co., Ltd.)), or a polysiloxane-based compound represented by the following formula (12) (for example, silicone-based surfactants, BYK-345, BYK-346, BYK-347 or BYK-348 (all trade names, manufactured by BYK Chemie GmbH)) may be used. In addition to these, an anionic surfactant (for example, sodium dodecyl benzenesulfonate, sodium laurate, or an ammonium salt of polyoxyethylene alkyl ether sulfate), a nonionic surfactant (for example, polyoxyethylene alkyl ether, polyoxyethylene alkyl ester, polyoxyethylene sorbitan fatty acid ester, polyoxyethylene alkyl phenyl ether, polyoxyethylene alkylamine, or polyoxyethylene alkylamide), or the like may also be used.

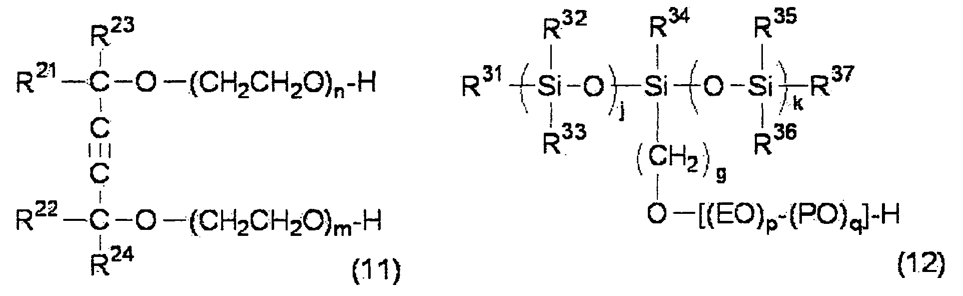

In the formula (11), 0 ≤ m+n ≤ 50; and R²¹ to R²⁴ each independently represent an alkyl group having 1 to 6 carbon atoms.
In formula (12), R³¹ to R³⁷ each independently represent an alkyl group having 1 to 6 carbon atoms; j, k and g each independently represent an integer of 1 or greater; EO represents an ethyleneoxy group; PO represents a propyleneoxy group; p and q each represent an integer of 0 or greater, provided that p+q represents an integer of 1 or greater; and EO and PO in the parentheses [] may be in a random form or in a block form, regardless of the order.
These surfactants may be used singly, or two or more kinds may be used in mixture.

The amount of incorporation of the surfactant is preferably from 0.01% by mass to 10% by mass, and more preferably from 0. 1 % by mass to 5% by mass, in the ink composition of the invention.

### (Other additives)

The ink composition of the invention may contain other additives as necessary, in addition to the components described above.
Examples of the other additives according to the invention include known additives such as a discoloration preventing agent, an emulsion stabilizer, an ultraviolet absorber, a preservative, an antifungal agent, a pH adjusting agent, a surface tension adjusting agent, a defoamant, a viscosity adjusting agent, a dispersion stabilizer, an antirust agent and a chelating agent. These various additives may be directly added after the preparation of the ink composition, or may be added during the preparation of the ink composition. Specific examples of the other additives include those described in paragraphs [0153] to [0162] of JP-A-2007-100071.

The surface tension of the ink composition of the invention is preferably 40 mN/m or less, and more preferably 28 mN/m to 35 mN/m, from the viewpoint of an enhancement of the penetrability of the ink composition into a recording medium such as paper, satisfactory spread of dots on the recording medium, prevention of color bleeding, and dryability.
The surface tension of the ink composition may be measured by, for example, a measurement apparatus such as Face automatic surface tensiometer (trade name: CPVP-Z, manufactured by Kyowa Interface Science Co., Ltd.).

The viscosity of the ink composition of the invention is preferably in the range of 1 to 30 mPa·s, more preferably in the range of 1 to 20 mPa· s, even more preferably in the range of 2 to 15 mPa- s and particularly preferably in the range of 2 to 10 mPa·s, from the viewpoint of droplet impact stability. The viscosity of the ink composition may be measured at 20°C using, for example, a Brookfield viscometer.

The pH of the ink composition of the invention is preferably from pH 7.5 to 10.0, and more preferably from pH 8 to 9, from the viewpoint of ink stability. Furthermore, the pH of the ink composition is measured at 25°C using a conventionally used pH measurement apparatus (for example, a multi-parameter water quality meter (trade name: MM-60R, manufactured by DKK Toa Corp.)).
The pH of the ink composition may be appropriately adjusted by using an acidic compound or a basic compound. Any conventionally used compound may be used as the acidic compound or the basic compound, without any particular limitations.

The ink composition of the invention may be prepared by mixing a coloring material containing at least one of an azo pigment represented by the formula (1) and a tautomer thereof, and salts and hydrates of the pigment and the tautomer; at least one kind of the dispersant; and at least one kind of colloidal silica; as well as at least one water-soluble organic solvent and a surfactant and the like according to necessity. A liquid composition obtainable by mixing the aforementioned components may be used as an ink composition, or the liquid composition may be used as an ink composition after being subjected to treatments such as filtration and sterilization (for example, heat treatment).
Filtration may be carried out by, for example, a filtration method using a membrane filter (for example, a 5-µm PVDF filter). Furthermore, sterilization may be carried out by a heat treatment (for example, heating for I to 4 hours at 60°C to 80°C).
According to the invention, it is preferable to treat the liquid composition by sterilization. (preferably, heat treatment), from the viewpoint of ink stability.

### <Image forming method>

The image forming method of the invention is constituted to include an ink ejection step of ejecting the aqueous ink composition of the invention onto a recording medium by an inkjet method, and the image forming method may include other steps as necessary.
That is, the image forming method of the invention which includes a step of forming an image by ejecting the aqueous ink composition of the invention by an inkjet method, is capable of suppressing a decrease in liquid repellency while suppressing corrosion of the inkjet head members, and is capable of forming fine and satisfactory images due to the excellent ejectability of the ink composition. Furthermore, since the ink composition is excellent in ejection stability and ejection restorability even after being stored for a long time under high temperature, the image forming method is capable of forming satisfactory images with high image quality over a long time period.

In the ink ejection step, the aqueous ink composition of the invention described above is applied onto a recording medium by an inkjet method. In the present step, the ink composition may be selectively applied on the recording medium, and thereby a desired visible image may be formed. The details of the various components and the details of preferred embodiments with regard to the ink composition of the invention have been described above.

Image formation using an inkjet method may be carried out by, specifically, applying energy and thereby ejecting the ink composition of the invention onto a desired recording medium, namely, ordinary paper, resin-coated paper, paper exclusive for inkjet recording such as described in, for example, JP-A-8-7 69172, JP-A-8-27693, JP-A-2-276670, JP-A-7-276789, JP-A-9-323475, JP-A-62-238783, JP-A-10-153989, JP-A-10-217473. JP-A-10-235995, JP-A-10-217597 or JP-A-10-337947, film, paper for both ordinary use and electrophotographic use, cloth, glass, metal, porcelain, or the like.
In the image forming method of the invention, the steps described in paragraphs [0093] to [0105] of JP-A-2003-306623 may be applied as additional steps.

There are no particular limitations on the inkjet method, and any of known systems may be employed, such as a charge control system of ejecting an ink by making use of electrostatic attraction force; a drop-on-demand system of utilizing the vibration pressure of a piezoelectric element (pressure pulse method); an acoustic inkjet system of converting electric signals into an acoustic beam, irradiating an ink with the acoustic beam, and ejecting the ink using radiation pressure; and a thermal inkjet (BUBBLEJET (registered trademark)) system of heating an ink to form air bubbles, and utilizing the pressure resulting therefrom.
Furthermore, the inkjet method described above includes the usage of a system that injects a large number of small-volume droplets of a low-concentration ink called photo-ink; a system that improves the image quality by using plural kinds of inks having a substantially identical hue but different concentrations; and a system that makes use of a colorless transparent ink.

The inkjet head used in the inkjet method may be an inkjet head used in an on-demand system or a continuous system. Specific examples of the ejection system include an electric-mechanical conversion system (for example, single cavity type, double cavity type, bender type, piston type, share mode type, or shared wall type), an electric-thermal conversion system (for example, thermal inkjet type, or BUBBLEJET (registered trademark) type), an electrostatic attraction system (for example, electric field control type, or slit jet type), and an electric discharge system (for example, spark jet type), and any of these ejection systems may be utilized.

The inkjet head used when images are formed by an inkjet method, is preferably equipped with at least a nozzle plate, and according to a more preferred embodiment, the nozzle plate has its surface treated to be liquid-repellent.
In regard to the nozzle plate in which the surface has been treated to be liquid-repellent, it is acceptable if the surface of the nozzle plate is treated to be liquid-repellent, and there are no particular limitations on whether the liquid-repellent treatment is achieved only in a part of the surface of the nozzle plate or over the entire surface.
When the nozzle plate in which the surface has been treated to be liquid-repellent is used, and an ink composition is ejected from that nozzle plate, excellent ejectability is obtained, while a decrease in the liquid repellency of inkjet head members is suppressed, so that satisfactory images are obtained.

According to a preferred embodiment, the inkjet ejection step involves ejection of an ink composition using an inkjet printer having a constitution in which at least a part of the flow channel that is brought into contact with an ink composition, contains at least one component selected from silicon and silicon dioxide, since remarkable effects are obtained in preventing the shape deformation that accompanies the corrosion resulting from a contact with ink.
The part of the flow channel that is brought into contact with an ink composition corresponds to the ink flow channel through which an ink flows, but is not particularly limited thereto, and the part of the flow channel refers to a part of a member that is brought into contact with an ink composition.

Now, a specific example of an inkjet head having a nozzle plate in which the surface has been treated to be liquid-repellent, and a nozzle plate in which a part of its flow channel that is brought into contact with ink is formed from silicon, will be described in the following, but the invention is not intended to be limited to this example.

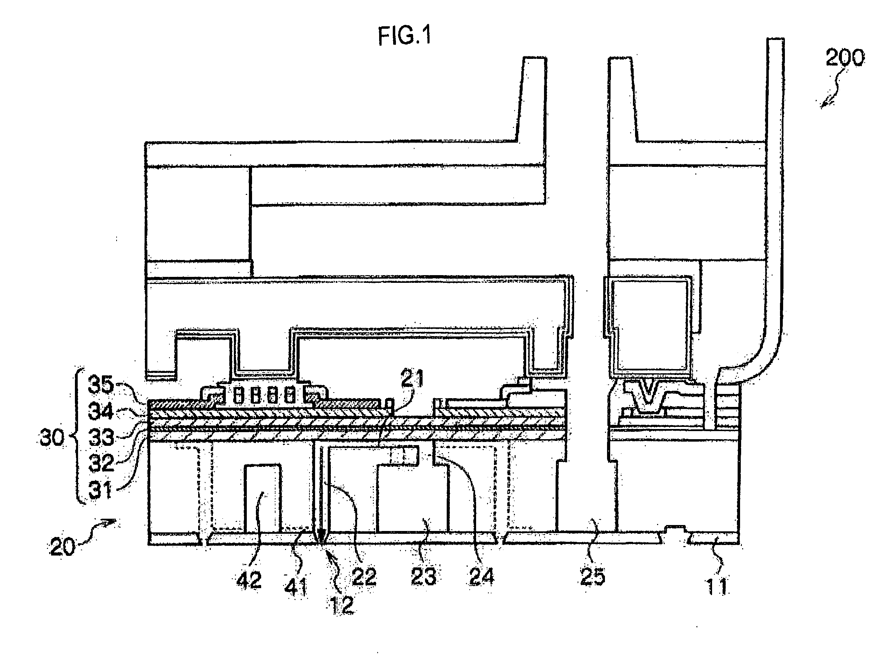

As shown in FIG. 1, the inkjet head 200 has a nozzle plate I I having ejection ports (nozzles), and an ink supply unit 20 installed on the opposite side of the direction of ejection of the nozzle plate. The nozzle plate II is provided with plural ejection ports 12 that eject ink.

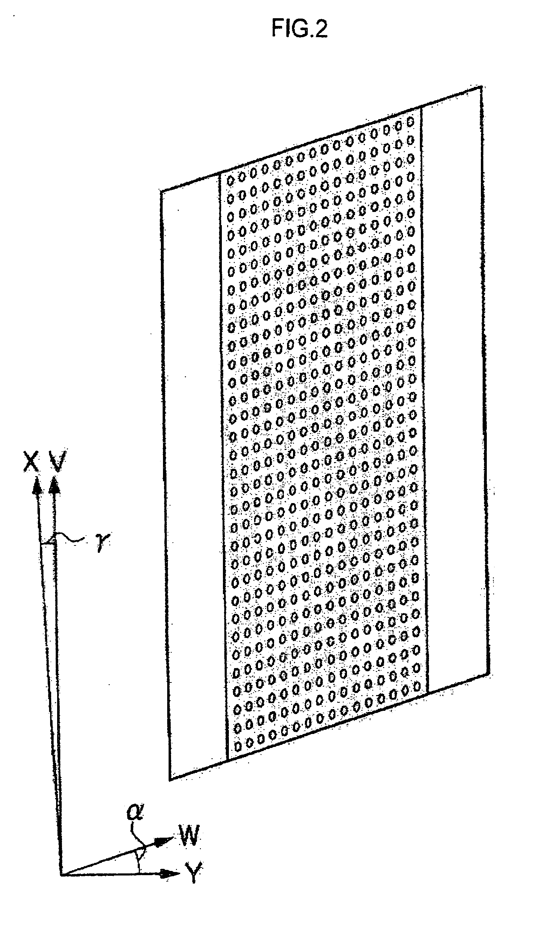

The nozzle plate 11 is provided, as shown in FIG. 2, with a two-dimensional array of 32x64 units of ejection ports (nozzles). According to the invention, it is preferable that a part or the entirety of this nozzle plate be formed of silicon. The interior of the nozzle openings and the surface on the side in the direction of ink ejection may have a structure with exposed silicon, or the interior and the surface are preferably coated with a film containing at least one selected from the group consisting of oxides and nitrides of metals (including silicon), and metals (excluding silicon). According to the invention, it is preferable that the nozzle plate surface have a deposition film of alkylsilane fluoride (liquid-repellent film containing alkylsilane fluoride) formed as a film containing a fluorocarbon (hereinafter, referred to as "fluorocarbon film"), by a chemical vapor deposition method using C₈F₁₇C₂H₄SiCI₃.
The fluorocarbon film may be formed by, for example, coating of a fluororesin, chemical vapor deposition, eutectoid plating with a fluorine-based polymer or the like, or a water-repellent treatment such as a silane fluoride treatment, an aminosilane treatment, or a fluorocarbon plasma polymerized film.

The water-repellent treatment according to the invention may be achieved by a method forming a liquid-repellent film of alkylsilane fluoride, and examples of the method include the following.
A first example is a method of forming a water-repellent monomolecular film or polymerized film by reacting a fluoroakyltrichlorosilane such as CF₃(CF₂)₈C₂H₄SiCl₃ with a base material (see Japanese Patent Nos. 2500816 and 2525536). In the formula, CF₃(CF₂)₈C₂H₄- is a fluoroalkyl group, while -SiCl₃ is a trichlorosilyl group. In this method, a base material having active hydrogen present on the surface, is exposed to a solution containing a fluoroalkyltrichlorosilane dissolved therein, so as to react the chlorosilyl group (-SiCl) with the active hydrogen, and to form a Si-O bond with the base material. As a result, the fluoroalkyl chain is fixed to the base material via the Si-O bond. Here, the fluoroalkyl chain imparts water repellency to the film. The water-repellent film is formed into a monomolecular film or a polymerized film, depending on the conditions for film forming.

A second example is a method of heating a porous base material impregnated with a compound containing a fluoroalkyl chain such as a fluoroalkylalkoxysilane, for example, CF₃(CF₂)₈C₂H₄Si(OCH)₃ in a vacuum to vaporize the compound, and thereby making the surface of the base material water-repellent (see JP-A-6-143586). In this method, it has been suggested to provide an intermediate layer formed of silicon dioxide or the like, in order to increase the adhesiveness between the water-repellent film and the base material.

A third example is a method of forming a fluoroalkylsilane film on the surface of a base material by a chemical vapor deposition method using a compound such as a fluoroalkyltrichlorosilane, for example, CF₃(CF₂)₈C₂H₄SiCl₃ (see JP-A-2000-282240).

A fourth example is a method of forming oxide microparticles of zirconia, alumina or the like on the surface of a base material, and then applying a fluoroalkylchlorosilane or a fluoroalkylalkoxysilane thereon (see JP-A-6-171094).

A fifth example is a method of forming a water-repellent film containing molecules having a fluoroalkyl chain mixed with a metal oxide, by subjecting a mixed solution of a fluoroalkylalkoxysilane and a metal alkoxide to hydrolysis and dehydration polymerization, subsequently applying this solution on a base material, and calcining the base material (see Japanese Patent Nos. 2687060, 2874391, 2729714 and 2555797). This method is intended such that the fluoroalkyl chain imparts water repellency to the film, while the metal oxide imparts high mechanical strength to the film.

Among the methods described above, the chemical vapor deposition method listed as the third example is preferred.
In the case of following the chemical vapor deposition method, when a container containing a fluorocarbon material such as alkylsilane fluoride, and a. silicon substrate are placed in a sealed vessel made of TEFLON (registered trademark) or the like, and this sealed vessel as a whole is heated by placing the vessel in an electric furnace or the like, to thereby vaporize the alkylsilane fluoride, the molecules of alkylsilane fluoride are deposited on the surface of the silicon substrate, and thus chemical vapor deposition is achieved. A monomolecular film of, for example, alkylsilane fluoride may be formed on a nozzle plate by a chemical vapor deposition method in this manner. In this case, the surface to be deposited of the silicon substrate is preferably hydrophilized. Specifically, for example, when the surface of a silicon substrate is cleaned using ultraviolet radiation (wavelength 172 nm), organic impurities are removed, and thereby a clean surface may be obtained. At this time, since the silicon surface is being covered with a SiO₂ film as a result of natural oxidation, water vapor in the atmosphere immediately adsorbs to the surface, so that the surface is covered with OH groups, and the surface becomes hydrophilic.

According to another embodiment of the chemical vapor deposition method, the method shown below may be used.
A liquid-repellent film of alkylsilane fluoride may be deposited on the external surface of an uncoated substrate by, for example, introducing a fluoroalkyltrichlarosilane such as CF₃(CF₂)₈C₂H₄SiCl₃ and water vapor into a CVD reactor under low pressure. The partial pressure of the fluaroalkyltrichlarosilane such as CF₃(CF₂)gC₂H₄SiCl₃ may be set at between 0.05 torr and 1 torr (6.67 Pa and 133.3 Pa) (for example, 0.1 torr to 0.5 torr (13.3 Pa to 66.5 Pa)), while the partial pressure of H_{2O} may be set at between 0.05 torr and 20 torr (for example, 0.1 torr to 2 torr). The deposition temperature may be set at between room temperature and 100°C. The coating process may be carried out using, for example, a Molecular Vapor Deposition (MVD)^{™} machine available from Applied Microstructures, Inc.

The liquid-repellent film is a film formed by using alkylsilane fluoride as a fluorocarbon, and it is particularly preferable to use a silane coupling compound represented by the following formula (F).

CₙF₂ₙ+1 -CₘH₂ₘ,-Si-X₃ formula (F)

In the formula (F), n represents an integer of 1 or greater; m represents zero, or an integer of 1 or greater; and X represents an alkoxy group, an amino group or a halogen atom, and a portion of X may be substituted with an alkyl group.

Examples of the alkylsilane fluoride include a fluoroalkyltrichlorosilane such as C₈F₁₇C₂H₄SiCl₃ or CF₃(CF₂)₈C₂H₄SiCl₃; and a fluoroalkylalkoxysilane such as CF₃(CF₂)₈C₂H₄Si(OCH₃)₃, 3,3,3-trifluoropropyltrimethoxysilane, tridecafluoro- 1, 1,2,2-tetrahydrooctyltrimethoxysilane, or heptadecafluoro-1,1,2,2-tetrahydrodecyltrimethoxysilane.

According to the invention, a fluorocarbon film formed from a silane coupling compound represented by the formula (F), by using a chemical vapor deposition method, is preferred.
In regard to the formula (F), it is preferable from the viewpoint of liquid repellency and the durability of the liquid-repellent film, when n is an integer from 1 to 14, m is zero or an integer from 1 to 5, and X is an alkoxy group or a halogen atom, and it is more preferable when n is an integer from 1 to 12, m is zero or an integer from 1 to 3, and X is an alkoxy group or a halogen atom.

There are no particular limitations on the thickness of the liquid -repellent film, but the thickness is preferably in the range of 0.2 nm to 30 nm, and more preferably in the range of 0.4 nm to 20 nm. The thickness of the liquid-repellent film does not cause any particular problem even in the range of greater than 30 nm, but it is advantageous in terms of uniformity of the film when the thickness is 30 nm or less, and satisfactory water repellency to the ink is obtained when the thickness is 0.2 nm, or greater.

High quality image recording with high accuracy at 1200 dpi may be achieved by high-speed single pass (one passage of the recording medium) using this nozzle plate. That is, since the plural nozzles of the nozzle plate are arranged in a two-dimensional matrix form, there is obtained a flow channel constitution in which the ink supply unit fixed to this nozzle plate is capable of ejecting a large amount of ink at high frequency (so-called high-duty ejection). In order to achieve high accuracy, silicon which allows the use of semiconductor processes, is used in a part or the entirety of the nozzle plate. Specifically, when the entirety or a part of the nozzle plate is formed of silicon, for example, monocrystalline silicon or polysilicon may be used as the silicon material. A nozzle plate formed from silicon is generally considered to have a problem with the occurrence of corrosion due to ink, and investigations have been made to prevent corrosion due to ink by using various protective films. However, complete prevention of the corrosion due to ink is an extremely difficult problem to solve, because of the factors such as film defects present in the protective film. Particularly, when ink ejection is achieved with a high frequency as in the case of high-speed single pass system, and when the nozzle plate is always likely to be in contact with fresh ink, it is highly likely that corrosion of silicon due to ink proceeds. Furthermore, in the high-speed single pass system where high accuracy is required, the level of request to prevent the deterioration in the degree of ejection accuracy resulting from ink corrosion is also high.
According to the invention, when the ink composition used for ejection contains an inorganic silicic acid compound, deterioration of silicon that is susceptible to corrosion may be effectively prevented.

This nozzle plate may be coated by forming a film containing at least one selected from the group consisting of oxides and nitrides of metals (including silicon), and metals (excluding silicon). Specifically, when the entirety or a part of the nozzle plate is formed from silicon, for example, monocrystalline silicon or polysilicon may be used as the silicon. Furthermore, when the entirety or a part of the nozzle plate is formed from silicon, for example, the nozzle plate may have a film of a metal oxide such as silicon oxide, titanium oxide or chromium oxide, a metal nitride such as titanium nitride or silicon nitride, or a metal such as zirconium, provided on a monocrystalline silicon substrate. Silicon oxide may be, for example, a SiO₂ film formed as a result of the oxidation of the entirety or a part of the silicon surface of the nozzle plate formed from silicon. The silicon surface may also have a film of tantalum oxide (preferably, tantalum pentoxide (Ta₂O₅)), zirconium, chromium, titanium, glass or the like, formed over a part or the entirety of the surface. Furthermore, the silicon surface may be constituted to have a portion thereof substituted with glass (for example, borosilicate glass, photosensitive glass, quartz glass or soda lime glass). A film formed from tantalum oxide, including tantalum pentoxide, has very excellent resistance to ink, and satisfactory corrosion resistance may be obtained particularly with respect to an alkaline ink.
One type of the method of forming the SiO₂ film will be described below. For example, when SiCI₄ and water vapor are introduced into a chemical vapor deposition (CVD) reactor in which an uncoated silicon substrate is placed, a SiO₂ film may be formed on the silicon substrate. The valve between the CVD chamber and a vacuum pump is closed after the chamber is emptied by pumping out the fluid inside the chamber, and the vapors of SiCI₄ and H₂O are introduced into the chamber. The partial pressure of SiCl₄ may be set at between 0.05 torr and 40 torr (6.67 Pa to 5.3 x 10³ Pa) (for example, 0.1 torr to 5 torr (13.3 Pa to 666.5 pa), while the partial pressure of H₂O may be set at between 0.05 torr and 20 torr (for example, 0.2 torr to 10 torr). The deposition temperature is generally between room temperature and 100°C. According to another embodiment, a SiO₂ film may be formed by sputtering on a silicon substrate. The surface to be coated with a SiO₂ film is preferably cleaned before forming the SiO₂ film (for example, by treating with oxygen plasma).

In FIG, 1, the ink supply unit 20 is equipped with plural pressure chambers 21 which respectively communicate with plural ejection ports 12 of the nozzle plate 17 through nozzle communication ports 22; plural ink supply flow channels 23 which respectively supply ink to the plural pressure chambers 27; a common liquid chamber 25 that supplies ink to the plural ink supply flow channels 23; and a pressure generating unit 30 that deforms each of the plural pressure chambers 21.

The ink supply flow channel 23 is formed between the ink supply unit 20 and the nozzle plate 11, and transports the ink supplied to the common liquid chamber 25. This ink supply flow channel 23 is connected with one end of a supply regulating port 24 which connects between the ink supply flow channel 23 and the pressure chamber 21, and is capable of narrowing the amount of ink supplied from the ink supply flow channel 23 to a required amount and transporting the ink to the pressure chamber 21. Plural supply regulating ports 24 are provided in the ink supply flow channel 23, and ink is supplied to the pressure chamber provided adjacent to the pressure generating unit 30 through these ink supply flow channels 23.
As such, a large amount of ink may be supplied to plural ejection ports.

The pressure generating unit 30 is an actuator (piezoelectric element) constructed by stacking, from the side of the pressure chamber 21, a vibrating plate 31, an adhesive layer 32, a lower electrode 33, a piezoelectric layer 34, and an upper electrode 35 in this order. The pressure generating unit 30 is connected with an electrical wiring which supplies driving signals from an external source, and is designed to be driven by the electrical wiring. The vibrating plate (pressurizing plate) 31 which constitutes the ceiling of the pressure chamber 21 is bonded with the piezoelectric layer together with an electrode, so that when a voltage is applied to the electrode, the actuator is deformed in accordance with the image signals, and ink is ejected through the nozzles via the nozzle communication ports. When ink is ejected, fresh ink is supplied from the common liquid chamber 25 to the pressure chamber 21 via the ink supply flow channels 23.

A circulation throttle 41 is provided in the vicinity of the ejection ports 12, so that ink may be circulated through the circulation channel 42 on a steady basis. Thereby, viscosity increase of the ink near the ejection ports ma be prevented at the time of non-ejection.

The inkjet method may be carried out by a shuttle system which forms images while scanning the head in the width direction of the recording medium using a short serial head, or a line system which uses a line head in which recording elements are arranged along the full length of one edge of the recording medium. In the line system, an image may be formed over the entire surface of a recording medium by scanning the recording medium in the direction perpendicular to the direction of the arrangement of recording elements, and thus a conveying system such as a carriage that scans the short head is unnecessary. Furthermore, since complicated control of scanning between the movement of the carriage and the recording medium is unnecessary, and thus only the recording medium moves, acceleration of the rate of image formation may be realized as compared with the shuttle system. According to the image forming method of the invention, any of these systems may be applied, but in general, the effects of enhancing ejection accuracy and the scratch resistance of the images are larger when the line system which does not carry out dummy jetting is applied.

Furthermore, in the ink ejection step according to the invention, image formation may be suitably carried out in the case of the line system, by not only using a single kind of ink composition, but also using two or more kinds of ink compositions, and by setting the ejection (droplet impact) interval between the ink composition that is ejected earlier (n-th color (n≥ 1), for example, a second color) and the ink composition that is ejected in succession ((n+1)-th color, for example, a third color), to be one second or shorter. According to the invention, when an ejection interval of one second or shorter is used in the line system, there may be obtained images which have excellent scratch resistance under the conventional, or even more severe, conditions of high-speed image formation, with reduced occurrences of blocking, while preventing the bleeding or color mixing caused by the interference between ink droplets. Furthermore, images that are excellent in color and drawing properties (reproducibility of fine lines or fine areas in the image) may be obtained.

The amount of liquid droplets of the ink ejected from the inkjet head is preferably 0.5 pl (picoliters) to 6 pl, more preferably 1 pl to 5 pl, and even more preferably 2 pl to 4 pt, from the viewpoint of obtaining high precision images.

The invention was achieved based on the finding that in the case where the nozzle plate of an inkjet head is formed from silicon or silicon oxide, under the circumstances in which liquid repellency of the liquid-repellent film is decreased as a result of the influence of the contact with ink, when colloidal silica is incorporated into an ink composition, an effect of preventing the decrease in liquid repellency of the liquid-repellent film is obtained, while this effect is particularly conspicuous when a particular azo pigment which is expected to cause strong corrosion is used in the ink composition. Furthermore, the ejectability during the ink ejection is not impaired.

Exemplary embodiments of the invention will be listed below. <1> An aqueous ink composition containing a coloring material containing at least one of an azo pigment represented by the following formula (1), a tautomers thereof, a salt of the pigment or the tautomer, or hydrate of the pigment or the tautomer, a dispersant, and colloidal silica:

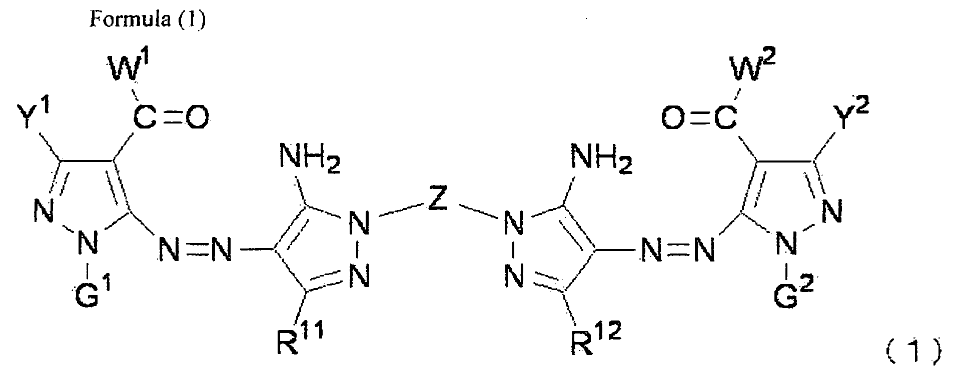

wherein Z represents a divalent group derived from a 5- to 8-membered nitrogen-containing heterocyclic ring; Y¹ Y², R¹¹ and R¹² each independently represent a hydrogen atom or a substituent; G¹ and G² each independently represent a hydrogen atom, an alkyl group, an aralkyl group, an alkenyl group, an alkynyl group, an aryl group or a heterocyclic group; and W¹ and W² each independently represent an alkoxy group, an amino group, an alkyl group or an aryl group.
<2> The aqueous ink composition according to the above item <1>,wherein W¹and W² in formula (1) each independently represent an alkoxy group having 3 or fewer carbon atoms, an unsubstituted amino group, or an alkylamino group having 3 or fewer carbon atoms.
<3> The aqueous ink composition according to the above item or , wherein G¹and G²in formula (1) each independently represent an alkyl group having 3 or fewer carbon atoms.
<4> The aqueous ink composition according to any one of the above items <1> to <3> , wherein Z in formula (1) is a divalent group derived from a 6-membered nitrogen-containing heterocyclic ring.
<5> The aqueous ink composition according to any one of the above items <1> to <4> , wherein pH at 25°C is from 7.5 to 10.0.
<6> The aqueous ink composition according to any one of the above items <1> to<5> , wherein the colloidal silica has a volume average particle size of 1 to 25 nm.
<7> The aqueous ink composition according to any one of the above items <1> to <6>, wherein the content of the colloidal silica is from 0.0005% by mass to 0.5% by mass relative to the total mass of the aqueous ink composition.
<8> The aqueous ink composition according to any one of the above items <1> to<7> , wherein the aqueous ink composition contains the coloring material in an amount of 0.3% by mass to 8% by mass relative to the total mass of the aqueous ink composition.
<9> The aqueous ink composition according to any one of the above items <1> to <8>, wherein the volume average particle size of the coloring material is 150 nm or less.
<10> The aqueous ink composition according to any one of the above items <1> to <9>, wherein the dispersant is a copolymer containing a hydrophilic constituent unit and a hydrophobic constituent unit.
<11> An image forming method including ejecting the aqueous ink composition according to any one of the above items <1> to <1> onto a recording medium by an inkjet method.
<12> The image forming method according to the above item <11> wherein ejecting of the aqueous ink composition includes ejecting the aqueous ink composition from a nozzle plate in which at least a part of a surface of the nozzle plate has been treated to be liquid-repellent.
<13> The image forming method according to the above item <11> or <12> wherein the ejecting of the aqueous ink composition includes ejecting teh aqueous ink composition using an inkjet printer in which at least a part of a flow channel that is brought into contact with the aqueous ink composition, contains at least one of Si or SiO₂.

### EXAMPLES

Hereinafter, the invention will be specifically described by way of Examples, but the invention is not limited to these Examples. Furthermore, unless particularly stated otherwise, the units "part" and "%" are on a mass basis.

### (Synthesis of yellow pigment)

### [Synthesis Example 1]

### - Synthesis of exemplary compound (Pig.-1) -

The synthesis scheme of exemplary compound (Pig.-1) is presented below.

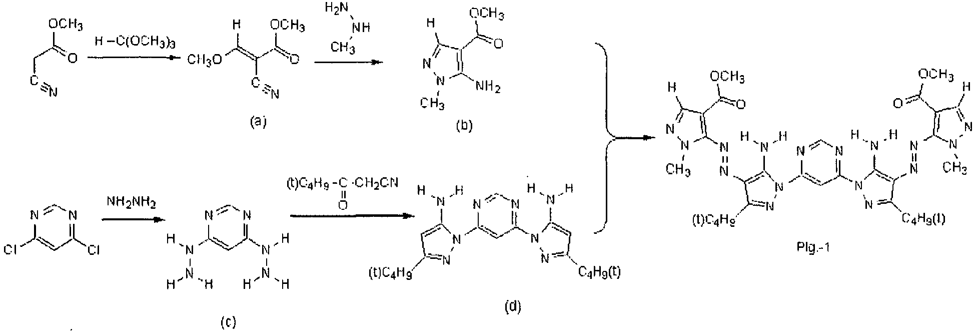

### (1) Synthesis of intermediate compound (a)

To 29.7 g (0.3 moles) of methyl cyanoacetate, 42.4 g (0.4 moles) of trimetyl orthoformate, 20.4 g (0.2 moles) of acetic anhydride, and 0.5 g of p-toluenesulfonic acid were added, and the mixture was heated to 110°C (external temperature). The mixture was stirred for 20 hours at that temperature, while low-boiling point components generated from the reaction system were distilled off. This reaction liquid was concentrated under reduced pressure, and then was purified using a silica gel column. Thus, 14.1 g of the intermediate compound (a) (yellow powder, yield 30%) was obtained. The results for an NMR analysis of the intermediate compound (a) thus obtained are as follows.
¹H-NMR (300MHz, CDCl₃) 7.96 (s, 1H), 4.15 (s, 3H), 3.81 (s, 3H)

### (2) Synthesis of intermediate compound (b)

150 mL of isopropanol was added to 7.4 mL (141 millimoles) of methylhydrazine, and the mixture was cooled to 15°C (internal temperature). 7.0 g (49.5 millimoles) of the intermediate compound (a) was slowly added to the mixture liquid, and then the resulting mixture was heated to 50°C and stirred for 1 hour 40 minutes. This reaction liquid was concentrated under reduced pressure, and then was purified using a silica gel column. Thus, 10.5 g of the intermediate compound (b) (white powder, yield 50%) was obtained. The results for an NMR analysis of the intermediate compound (b) thus obtained are as follows.
¹H-NMR (300MHz, CDCl₃) 7.60 (s, 1H), 4.95 (brs, 2H), 3.80 (s, 3H), 3.60 (s, 3H)

### (3) Synthesis of intermediate compound (c)

100 mL of methanol was added to 130 mL of hydrazine monohydrate, and the mixture was cooled to 10°C (internal temperature). 50.0 g (336 millimoles) of 4,6-dichloropyrimidine was slowly added to the mixture (internal temperature 20°C or below), and then the resulting mixture was heated to 50°C and stirred for 4 hours 30 minutes. Crystals precipitated from the reaction liquid were collected by filtration, washed with isopropanol and then dried. Thus, 43.1 g of the intermediate compound (c) (white powder, yield 92%) was obtained. The results for an NMR analysis of the intermediate compound (c) thus obtained are as follows.
¹H-NMR (300MHz, d₆-DMSO) 7.82 (s, 1H), 7.55 (s, 2H), 5.96 (s, 1H), 4.12 (s, 4H)

### (4) Synthesis of intermediate compound (d)

900 mL of water was added to 35.0 g (0.25 moles) of the intermediate compound (c) and 68.8 g (0.55 moles) of pivaloylacetonitrile, and the mixture was stirred at room temperature. A I M aqueous hydrochloric acid solution was added dropwise to the resulting suspension to adjust the pH to 3, and then the mixture was heated to 50°C and stirred for 8 hours. An 8 M aqueous solution of potassium hydroxide was added dropwise to the reaction liquid to adjust the pH to 8, and a 1 M aqueous hydrochloric acid solution was further added dropwise thereto to adjust the pH to 6. Crystals thus precipitated were collected by filtration, washed with isopropanol and dried. Thus, 83.0 g of the intermediate compound (d) (white powder, yield 94%) was obtained. The results for an NMR analysis of the intermediate compound (d) thus obtained are as follows.
¹H-NMR (300MHz, d₆-DMSO) 8.73 (s, 1H), 7.97 (s, 1H), 6.88 (s, 4H), 5.35 (s, 2H), 1.22 (s, 18H)

### (5) Synthesis of exemplary compound (Pig.-1)

18.5 mL of acetic acid was added to 4.1 mL of concentrated sulfuric acid, and the mixture was stirred under ice cooling. Then, 3.85 g (12.1 millimoles) of 40% nitrosylsulfuric acid was added dropwise thereto. 1.71 g (11.0 millimoles) of the intermediate compound (b) was slowly added to this mixed liquid (internal temperature 0°C or below), and then the resulting mixture was stirred for 2 hours at 0°C. 150 mg of urea was added to this reaction liquid, and the mixture was stirred for 15 minutes at 0°C. Thus, a diazo liquid A was prepared.
50 mL of methanol was added to the intermediate compound (d), and the mixture was heated to dissolve and then was stirred under ice cooling. The diazo liquid A was slowly added dropwise to the mixed liquid (internal temperature 10°C or below). This reaction liquid was stirred for 2 hours at room temperature, and then crystals precipitated therefrom were collected by filtration and washed with methanol. Thus, crude crystals of the exemplary compound (Pig.- 1) were obtained. Furthermore, water was added to the crude crystals, and the mixture was stirred. Subsequently, this suspension was adjusted to pH 7 using an aqueous solution of sodium hydroxide. 20 mL of dimethylacetamide was further added thereto, and the resulting mixture was stirred for 2 hours at 80°C. Crystals precipitated therefrom were collected by filtration, and were suspension washed with methanol. Crystals thus obtained were collected by filtration and dried, and thus 2.0 g of exemplary compound (Pig.-1) (yellow powder, yield 79%) was obtained.

### <Example1>

### (Preparation of yellow pigment dispersion YD-1)

### Yellow pigment dispersion YD-1 was prepared as follows.

10.0 parts of the exemplary compound (Fig.-1), which is a yellow azo pigment, was mixed with 4.0 parts of a styrene-acrylic acid-based polymeric dispersant (trade name: JONCRYL 68, manufactured by BASF Japan, Ltd.; weight average molecular weight 10,000, acid value 195 mg KOH/g), and ion-exchanged water in an amount which made up the total amount into 100 parts. Subsequently, the mixed liquid was stirred with a dissolver until a uniform state was obtained, and thus a preliminary dispersion liquid was obtained. The preliminary dispersion liquid thus obtained was subjected to a dispersion treatment for 5 hours in a bead mill using 0.1-mmφ zirconia beads. After the dispersion treatment, the zirconia beads were removed, and thus a pigment dispersion liquid was obtained. The pigment dispersion liquid was sterilized at 70°C for 3 hours, and then pure water was added thereto to obtain a pigment concentration of 10%. Thus, a yellow pigment dispersion YD-1 was prepared.

### (Preparation of urethane-modified polyester resin)

In a pressurizable polymerization vessel equipped with a thermometer and a stirrer, 205.0 parts of adipate diol (number average molecular weight 2000) obtainable by dehydration copolymerization of 3-methylpentanediol and adipic acid, 8.5 parts of 1,4-butanediol, 3.8 parts of n-butanol, 48.5 parts of dimethylolpropionic acid, 140.0 parts of isophorone diisocyanate, and 255.5 parts of methyl ethyl ketone were introduced, and after the reaction system was purged with nitrogen gas, the mixture was allowed to react for 7 hours. Thus, a urethane-modified polyester resin was obtained. The solution thus obtained was cooled to room temperature, and 31.5 parts of triethylamine was added thereto. Subsequently, 1400 parts of ion-exchanged water was added, and methyl ethyl ketone was distilled off under reduced pressure. Thus, a 25% aqueous solution of a urethane-modified polyester resin was obtained. The molecular weight of this resin was 13500, and the acid value was 67.

### - Measurement of particle size of yellow pigment dispersion -

For the yellow pigment dispersion thus obtained, the volume average particle size (Mv) was measured by a dynamic light scattering method using a Nanotrac particle size distribution analyzer (trade name: UPA-EX150, manufactured by Nikkiso Co., Ltd.), and an evaluation was made according to the following evaluation criteria.

### - Evaluation criteria -

A: Mv was less than 90 nm.
B: Mv was greater than or equal to 90 nm and less than 120 nm.
C: Mv was 120 nm or greater.

### (Preparation of aqueous ink composition YI-1)

The yellow pigment dispersion YD-1 and urethane-modified polyester resin obtained as described above were used, and various components were mixed therewith to obtain the ink composition shown below. Thus, an aqueous ink composition Yl-l was prepared. The pH (25°C) of the composition was 8.5.

### <Composition of aqueous ink composition Y1-1>

| | | | | | |
|---|---|---|---|---|---|
| | · Yellow pigment dispersion YD-1 | | 25.0 parts | | |
| | · BYK347 | | | | 0.5 parts |
| | (trade name, manufactured by BYK Chemie Japan K.K.; surfactant) | | | | |
| | 1,2-Hexanediol | | | 10.0 parts | |
| | · Glycerin | | | | 12.0 parts |
| | . Triethanolamine | | | 1.0 parts | |
| | . 25% Aqueous solution of urethane-modified polyester resin | | | | |
| | | 1.0 parts | | | |
| | · Colloidal silica (solids content) | | 1.5 parts | | |
| | (trade name: SNOWTEX C, manufactured by Nissan Chemical Industry Co., Ltd.; | | | | |
| solids concentration 20%) | | | | | |
| | · PROXEL XL-2 | | | | 0.05 parts |
| | (trade name, manufactured by Arch Chemicals Japan, Inc.; antifungal agent) | | | | |
| | · Benzotriazole | | | | 0.05 parts |
| | ·ORFIN E1010 | | | | 1.0 part |
| | (trade name, manufactured by Nissin Chemical Industry Co.. Ltd.) | | | | |
| | · Ion-exchanged water | | Balance to obtain a total amount of 100 | | |
| parts | | | | | |

### <Examples 2 to 6>

Yellow inks YI-2 to YI-6 were respectively prepared in the same manner as described above, except that the type and amount of addition of the colloidal silica used in the preparation of the aqueous ink composition YI-I were respectively changed as indicated in the following Table 1.

### <Examples 7 to 24>

Aqueous ink compositions YI-7 to YI-24 were respectively prepared in the same manner as in Example 3, except that the yellow azo pigments indicated in the following Table I were used instead of the exemplary compound (Pig.-1) used in the preparation of the aqueous ink composition YI-3 as a yellow azo pigment.

### <Comparative Example 1>

An aqueous ink composition YI-25 was prepared in the same manner as in Example 3, except that colloidal silica used in the preparation of the aqueous ink composition YI-3 was not added.

### <Evaluations>

The following evaluations were performed on the aqueous ink compositions obtained as described.

### (Liquid repellency evaluation)

### - Liquid-repellent film immersion test -

A test specimen for evaluation was produced, in which a liquid-repellent film (SAM film) was formed by using an alkylsilane fluoride compound (C₈F₁₇C₂H₄SiC1₃) on a silicon plate having a size of 2 cm x 2 cm. The test specimen thus produced was used to measure the contact angle of water on the liquid-repellent film as follows, and thus the effect of the aqueous ink composition on the liquid repellency of the liquid-repellent film was evaluated.
30 ml each of the aqueous ink compositions prepared as described above were dispensed in 50-ml wide mouth bottles made of polypropylene (trade name: I-BOI WIDE MOUTH BOTTLE 50 ml, manufactured by As One Corp.). Subsequently, the test specimen described above was immersed in each of the aqueous ink compositions, and was left immersed under heating for a period of 72 hours at 60°C. The test specimen was taken out and washed with ultrapure water. The contact angle of water on the surface of the liquid-repellent film was measured.
Ultrapure water was used for the measurement of the contact angle of water, and the measurement was performed according to a conventional method in an environment of 25°C and 50 RH%, using a contact angle analyzer (trade name: DM-500, manufactured by Kyowa Interface Science Co.. Ltd.), and an evaluation was made according to the following evaluation criteria.
The contact angle of water prior to the immersion in the aqueous ink composition was 106.5°, and grade D is a level having problems for practical use.

### - Evaluation criteria -

AA: 80° or greater
A: Equal to or greater than 60° and less than 80°
B: Equal to or greater than 40° and less than 60°
C: Equal to or greater than 20° and less than 40°
D: Less than 20°

### (Evaluation of ejectability)

An inkjet head equipped with a silicon nozzle plate such as shown in FIG. 1 was fixed such that the direction of movement of the stage is perpendicular to the direction of nozzle arrangement. Furthermore, the silicon nozzle plate was preliminarily provided with a liquid-repellent film obtained by the method described below using an alkylsilane fluoride compound (C₈F₁₇C₂H₄SiCl₃).
Next, the aqueous ink composition produced as described above was filled again in the storage tank connected to this nozzle plate. KASSAI PHOTO FINISH PRO (trade name, manufactured by Fujifilm Corp.), which was used as a recording medium, was pasted to the stage which moved in the direction perpendicular to the direction of nozzle arrangement of the head. Next, the stage was moved at a rate of 248 mm/min, and 96 lines were produced by ejecting 2000 ink droplets per nozzle in parallel with the direction of conveyance under the conditions of an amount of ink droplet of 3.4 pL, ejection frequency of 10 kHz at 75 x 1200 dpi in the direction of nozzle arrangement x direction of conveyance, and thus a print sample was produced. The print sample thus obtained was visually observed, and it was confirmed that the aqueous ink composition was ejected from all of the nozzles.
After the aqueous ink composition was ejected, the head was left to stand for a predetermined time without being touched. Subsequently, a new recording medium was pasted, and the aqueous ink composition was ejected again under the same conditions to produce a print sample. The print sample thus obtained was visually observed, and after the head was left to stand for a predetermined time, 2000 droplets were ejected. Thus, the ejectability after the maximum standing time possible for the ejection through all of the 96 nozzles (ejection restorability), was evaluated. Ejectability was considered to be more satisfactory as the standing time after which ejection failure did not occur was longer, and the following evaluation criteria were established.
Here, grade D is a level having problems for practical use. The evaluations results are presented in Table 1.

### - Evaluation criteria -

A: Standing time was 45 minutes or longer.
B: Standing time was equal to or greater than 30 minutes and less than 45 minutes.
C: Standing time was equal to or greater than 20 minutes and less than 30 minutes.
D: Standing time was less than 20 minutes.

### - Formation of silicon oxide film (liquid-repellent film) on silicon nozzle plate -

A silicon oxide film (SiO₂ film) was formed on the surface on the side of the direction of ink ejection of a silicon nozzle plate formed from single crystal silicon, and the silicon oxide film was formed by introducing SiC1₄ and water vapor into a chemical vapor deposition (CVD) reactor. The thickness of the SiO₂ film was 50 nm. Furthermore, the silicon nozzle plate was subjected to an oxygen plasma treatment and then was subjected to a chemical vapor deposition (CVD) method by using C₈F₁₇C₂H₄SiCl₃, and thus a liquid-repellent film was formed on the SiO₂ film. The liquid-repellent film was formed by introducing C₈F₁₇C₂H₄SiCl₃ and water vapor into a CVD reactor at low pressure. The thickness of the liquid-repellent film was 10 nm. As shown in FIG. 2, the silicon nozzle plate had a number of nozzles arranged in a two-dimensional matrix form, so that the nozzle plate could eject ink droplets with high accuracy.

[Table 1]

**Table 1**

| | Aqueous ink composition | Coloring material | | | Colloidal silica | | | pH of aqueous ink composition | Evaluation | |
|---|---|---|---|---|---|---|---|---|---|---|
| | | Type | Volume average particle size | Content (relative to total mass of ink, mass%) | Type | Particle size (nm) | Content (relative to total mass of ink, mass%) | | Liquid repellency | Ejectability |
| Example 1 | YI-1 | Pig.-1 | A | 2.5 | SNOWREX C | 15 | 1.5 | 8.5 | A | C |
| Example 2 | YI-2 | Pig.-1 | A | 2.5 | SNOWTEX C | 15 | 0.5 | 8.4 | A | B |
| Example 3 | YI-3 | Pig.-1 | A | 2.5 | SNOWTEX C | 15 | 0.05 | 8.2 | A | A |
| Example 4 | YI-4 | Pig.-1 | A | 2.5 | SNOWTEX C | 15 | 0.005 | 8.2 | B | A |
| Example 5 | YI-5 | pig.-1 | A | 2.5 | SNOWTEX XS | 5 | 0.05 | 8.5 | A | A |
| Example 6 | YI-6 | Pig.-1 | A | 2.5 | SNOWTEX CM | 25 | 0.05 | 8.6 | B | B |
| Example 7 | YI-7 | Pig.-2 | A | 2.5 | SNOWTEX C | 15 | 0.05 | 8.3 | A | A |
| Example 8 | YI-8 | Pig.-3 | A | 2.5 | SNOWTEX C | 15 | 0.05 | R.5 | A | A |
| Example 9 | YI-9 | Pig.-4 | B | 2.5 | SNOWTEX C | 15 | 0.05 | 8.5 | A | A |
| Example 10 | YI-10 | Pig.-6 | A | 2.5 | SNOWTEX C | 15 | 0.05 | 8.3 | A | A |
| Example 11 | YI-11 | Pig.-9 | A | 2.5 | SNOWTEX C | 15 | 0.05 | 8.5 | A | A |
| Example 12 | YI-12 | Pig.- 10 | A | 2.5 | SNOWTEX C | 15 | 0.05 | 8.4 | B | A |
| Example 13 | YI-13 | Pig.-11 | A | 2.5 | SNOWTEX C | 15 | 0.05 | 8.3 | A | A |
| Example 14 | YI-14 | Pig.-12 | A | 2.5 | SNOWTEX C | 15 | 0.05 | 8.4 | A | A |
| Example 15 | YI-15 | Pig.-15 | A | 2.5 | SNOWTEX C | 15 | 0.05 | 8.3 | A | A |
| Example 16 | YI-16 | Pig.-18 | A | 2.5 | SNOWTEX C | 15 | 0.05 | 8.5 | A | A |
| Example 17 | YI-17 | Pig.-19 | A | 2.5 | SNOWTEX C | 15 | 0.05 | 8.3 | B | A |
| Example 18 | YI-18 | Pig.-21 | A | 2.5 | SNOWTEX C | 15 | 0.05 | 8.4 | A | A |
| Example 19 | YI-19 | Pig.-24 | B | 2.5 | SNOWTEX C | 15 | 0.05 | 8.2 | A | A |
| Example 20 | YI-20 | Pig.-25 | A | 2.5 | SNOWTEX C | 15 | 0.05 | 8.3 | B | A |
| Example 21 | YI-2.1 | Pig.-34 | B | 2.5 | SNOWTEX C | 15 | 0.05 | 8.5 | A | A |
| Example 22 | YI-22 | Pig.-35 | B | 2.5 | SNOWTEX C | 15 | 0.05 | 8.3 | A | A |
| Example 23 | YI-23 | Pig.-36 | A | 2.5 | SNOWTEX C | 15 | 0.05 | 8.4 | A | A |
| Example 24 | YI-24 | Pig.-37 | A | 2.5 | SNOWTEX C | 15 | 0.05 | 8.3 | A | A |
| Comparative Example 1 | VI-25 | Pig.-1 | A | 2.5 | - | - | - | 8.2 | D | D |

As it is obvious from the Table 1, it is understood that the Examples having the constitution of the invention have satisfactory liquid repellency and ejectability (ejection restorability).

When image formation according to an inkjet method is carried out for a long time period, inkjet head members are corroded by ink compositions and the like, and as a result, ejection may be deteriorated, or ink leakage may occurs. Furthermore, there has been a problem that the liquid repellency of the nozzle plate is lowered, and the direction of ink ejection is disturbed, so that the print quality is deteriorated.
The invention provides an aqueous ink composition which has excellent long-term ejectability, and is capable of suppressing the shape deformation of inkjet head members and a decrease in liquid repellency, and also provides an image forming method which is capable of forming high quality images over a long time period while suppressing the corrosion of inkjet head members.

## Claims

1. An aqueous ink composition comprising:
a coloring material containing at least one of an azo pigment represented by the Following formula (1), a tautomer thereof a salt of the pigment or the tautomer, or a hydrate of the pigment or the tautomer:
a dispersant; and
colloidal silica: 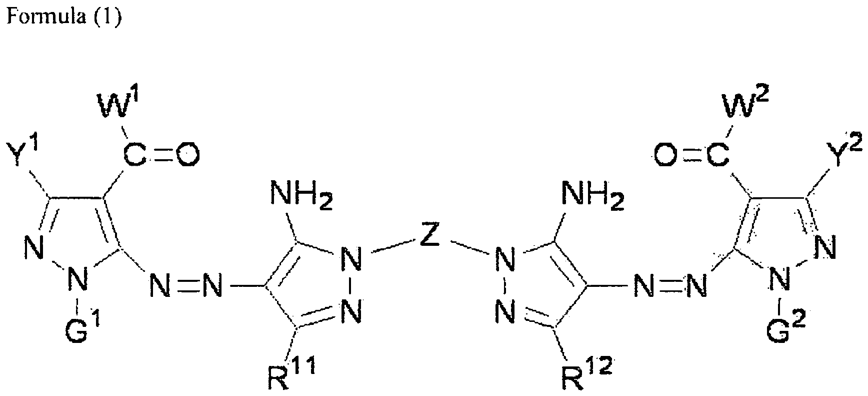
wherein in formula (1), Z represents a divalent group derived from a 5- to 8-membered nitrogen-containing heterocyclic ring: Y¹, Y². R¹¹ and R¹² each independently represent a hydrogen atom or a substituent: G¹ and G² each independently represent a hydrogen atom, an alkyl group, an aralkyl group, an alkenyl group, an alkynyl group, an aryl group or a heterocyclic group: and W¹ and W² each independently represent an alkoxy group, an amino group, an alkyl group or an aryl group.

2. The aqueous ink composition of claim 1, wherein W¹ and W² in formula (1) each independently represent an alkoxy group having 3 or fewer carbon atoms in total, an unsubstituted amino group, or an alkylamino group having 3 or fewer carbon atoms in total.

3. The aqueous ink composition of claim 1 or 2, wherein G¹ and G² in formula (1) each independently represent an alkyl group having 3 or fewer carbon atoms in total.

4. The aqueous ink composition of any one of claims 1 to 3, wherein Z in formula (1) represents a divalent group derived from a 6-membered nitrogen containing heterocyclic ring.

5. The aqueous ink composition of any one of claims 1 to 4, wherein the pH of the aqueous ink composition at 25°C is from 7.5 to 10.0.

6. The aqueous ink composition of any one of claims 1 to 5, wherein the colloidal silica has a volume average particle size of 1 to 25 nm.

7. The aqueous ink composition of any one of claims 1 to 6, wherein the content of the colloidal silica is from 0.0005% by mass to 0.5% by mass relative to the total mass of the aqueous ink composition.

8. The aqueous ink composition of any one of claims 1 to 7, wherein the aqueous ink composition contains the coloring material in an amount of 0.3% to 8% by mass relative to the total mass of the aqueous ink composition.

9. The aqueous ink composition of any one of claims 1 to 8, wherein the volume average particle size of the coloring material is 150 nm or less.

10. The aqueous ink composition of any one of claims 1 to 9, wherein the dispersant is a copolymer containing a hydrophilic constituent unit and a hydrophobic constituent unit.

11. An image forming method comprising:
ejecting the aqueous ink composition of any one of claims 1 to 10 onto a recording medium by an inkjet method.

12. The image forming method of claim 11, wherein the ejecting of the aqueous ink composition comprises ejecting the aqueous ink composition from a nozzle plate in which at least a part of a surface of the nozzle plate has been treated to be liquid-repellent.

13. The image forming method of claim 11 or 12, wherein the ejecting of the aqueous ink composition comprises ejecting the aqueous ink composition using an inkjet printer in which at least a part of a flow channel that is brought into contact with the aqueous ink composition contains at least one of Si or SiO₂.

## Patentansprüche

1. Wässrige Tintenzusammensetzung, umfassend:
ein Färbematerial, umfassend zumindest eines von einem Azopigment, dargestellt durch die folgende Formel (1), einem Tautomer davon, einem Salz des Pigmentes oder des Tautomers oder einem Hydrat des Pigmentes oder des Tautomers;
ein Dispergiermittel, und
kolloidales Silica: 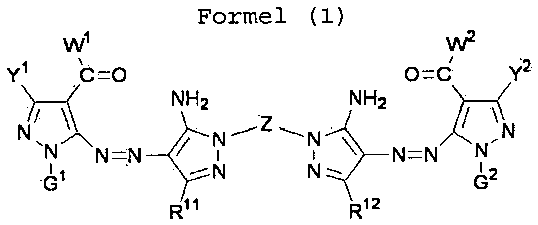
worin in der Formel (1) Z eine bivalente Gruppe ist, die sich von einem 5- bis 8-gliedrigen stickstoffhaltigen heterocyclischen Ring ableitet, Y¹, Y², R¹¹ und R¹² jeweils unabhängig ein Wasserstoffatom oder ein Substituent sind; G¹ und G² jeweils unabhängig ein Wasserstoffatom, eine Alkylgruppe, Aralkylgruppe, Alkenylgruppe, Alkinylgruppe, Arylgruppe oder heterocyclische Gruppe sind; und W¹ und W² jeweils unabhängig eine Alkoxygruppe, Aminogruppe, Alkylgruppe oder Arylgruppe sind.

2. Wässrige Tintenzusammensetzung nach Anspruch 1, worin W¹ und W² in der Formel (1) jeweils unabhängig eine Alkoxygruppe mit 3 oder weniger Kohlenstoffatomen insgesamt, eine unsubstituierte Aminogruppe oder Alkylaminogruppe mit 3 oder weniger Kohlenstoffatomen insgesamt sind.

3. Wässrige Tintenzusammensetzung nach Anspruch 1 oder 2, worin G¹ und G² in der Formel (1) jeweils unabhängig eine Alkylgruppe mit 3 oder weniger Kohlenstoffatomen insgesamt sind.

4. Wässrige Tintenzusammensetzung nach einem der Ansprüche 1 bis 3, worin Z in der Formel (1) eine bivalente Gruppe ist, die sich von einem 6-gliedrigen stickstoffhaltigen heterocyclischen Ring ableitet.

5. Wässrige Tintenzusammensetzung nach einem der Ansprüche 1 bis 4, worin der pH der wässrigen Tintenzusammensetzung bei 25°C von 7,5 bis 10,0 ist.

6. Wässrige Tintenzusammensetzung nach einem der Ansprüche 1 bis 5, worin das kolloidale Silica eine volumengemittelte Teilchengröße von 1 bis 25 nm hat.

7. wässrige Tintenzusammensetzung nach einem der Ansprüche 1 bis 6, worin der Gehalt des kolloidalen Silica von 0,0005 bis 0,5 Massen-% bezogen auf die Gesamtmasse der wässrigen Tintenzusammensetzung ist.

8. wässrige Tintenzusammensetzung nach einem der Ansprüche 1 bis 7, worin die wässrige Tintenzusammensetzung das Färbematerial in einer Menge von 0,3 bis 8 Massen-% bezogen auf die Gesamtmasse der wässrigen Tintenzusammensetzung enthält.

9. Wässrige Tintenzusammensetzung nach einem der Ansprüche 1 bis 8, worin die volumengemittelte Teilchengröße des Färbematerials 150 nm oder weniger ist.

10. Wässrige Tintenzusammensetzung nach einem der Ansprüche 1 bis 9, worin das Dispergiermittel ein Copolymer ist, umfassend eine hydrophile Bestandteilseinheit und eine hydrophobe Bestandteilseinheit.

11. Bildgebungsverfahren, umfassend:
Ejizieren der wässrigen Tintenzusammensetzung nach einem der Ansprüche 1 bis 10 auf ein Aufzeichnungsmedium durch ein Tintenstrahlverfahren.

12. Bildgebungsverfahren nach Anspruch 11, worin das Ejizieren der wässrigen Tintenzusammensetzung das Ejizieren der wässrigen Tintenzusammensetzung von einer Düsenplatte umfasst, worin zumindest ein Teil einer Oberfläche der Düsenplatte behandelt ist, dass es flüssigkeitsabstoßend ist.

13. Bildgebungsverfahren nach Anspruch 11 oder 12, worin das Ejizieren der wässrigen Tintenzusammensetzung das Ejizieren der wässrigen Tintenzusammensetzung unter Verwendung eines Tintenstrahldruckers umfasst, worin zumindest ein Teil eines Fließkanals, das mit der wässrigen Tintenzusammensetzung in Kontakt gebracht wird, zumindest eines von Si oder SiO₂ enthält.

## Revendications

1. Composition d'encre aqueuse comprenant :
un matériau colorant contenant au moins un d'un pigment azo représenté par la formule (1) suivante, d'un tautomère de celui-ci, d'un sel du pigment ou du tautomère, ou d'un hydrate du pigment ou du tautomère ;
un dispersant ; et
de la silice colloïdale : 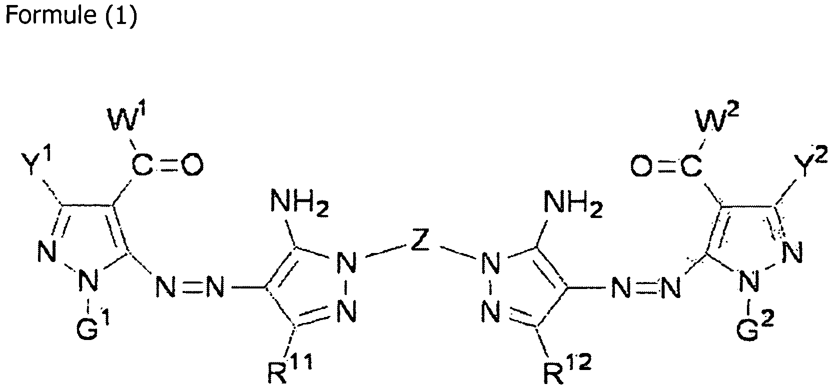
dans laquelle dans la formule (1), Z représente un groupe divalent dérivé d'un cycle hétérocyclique contenant de l'azote à de 5 à 8 éléments ; Y¹, Y², R¹¹ et R¹² représentent chacun indépendamment un atome d'hydrogène ou un substituant ; G¹ et G² représentent chacun indépendamment un atome d'hydrogène, un groupe alkyle, un groupe aralkyle, un groupe alcényle, un groupe alcynyle, un groupe aryle ou un groupe hétérocyclique ; et W¹ et W² représentent chacun indépendamment un groupe alcoxy, un groupe amino, un groupe alkyle ou un groupe aryle.

2. Composition d'encre aqueuse selon la revendication 1, dans laquelle W¹ et W² dans la formule (1) représentent chacun indépendamment un groupe alcoxy ayant un total de 3 atomes de carbone ou moins, un groupe amino non substitué, ou un groupe alkylamino ayant un total de 3 atomes de carbone ou moins.

3. Composition d'encre aqueuse selon la revendication 1 ou 2, dans laquelle G¹ et G² dans la formule (1) représentent chacun indépendamment un groupe alkyle ayant un total de 3 atomes de carbone ou moins.

4. Composition d'encre aqueuse selon l'une quelconque des revendications 1 à 3, dans laquelle Z dans la formule (1) représente un groupe divalent dérivé d'un cycle hétérocyclique contenant de l'azote à 6 éléments.

5. Composition d'encre aqueuse selon l'une quelconque des revendications 1 à 4, dans laquelle le pH de la composition d'encre aqueuse à 25°C est de 7,5 à 10,0.

6. Composition d'encre aqueuse selon l'une quelconque des revendications 1 à 5, dans laquelle la silice colloïdale présente une taille moyenne de particule en volume de 1 à 25 nm.

7. Composition d'encre aqueuse selon l'une quelconque des revendications 1 à 6, dans laquelle la teneur de la silice colloïdale est de 0,0005 % en masse à 0,5 % en masse par rapport à la masse totale de la composition d'encre aqueuse.

8. Composition d'encre aqueuse selon l'une quelconque des revendications 1 à 7, dans laquelle la composition d'encre aqueuse contient le matériau colorant dans une quantité de 0,3 % à 8 % en masse par rapport à la masse totale de la composition d'encre aqueuse.

9. Composition d'encre aqueuse selon l'une quelconque des revendications 1 à 8, dans laquelle la taille moyenne de particule en volume du matériau colorant est de 150 nm ou inférieure.

10. Composition d'encre aqueuse selon l'une quelconque des revendications 1 à 9, dans laquelle le dispersant est un copolymère contenant une unité constituante hydrophile et une unité constituante hydrophobe.

11. Procédé de formation d'une image comprenant :
l'éjection de la composition d'encre aqueuse selon l'une quelconque des revendications 1 à 10 sur un support d'enregistrement par un procédé de jet d'encre.

12. Procédé de formation d'une image selon la revendication 11, dans lequel l'éjection de la composition d'encre aqueuse comprend l'éjection de la composition d'encre aqueuse à partir d'une plaque de buse dans laquelle au moins une partie d'une surface de la plaque de buse a été traitée pour être liquide-répulsive.

13. Procédé de formation d'une image selon la revendication 11 ou 12, dans lequel l'éjection de la composition d'encre aqueuse comprend l'éjection de la composition d'encre aqueuse en utilisant une imprimante à jet d'encre dans laquelle au moins une partie d'un canal d'écoulement qui est mise en contact avec la composition d'encre aqueuse contient au moins un de Si ou SiO₂.
